(19) **Europäisches Patentamt European Patent Office Office européen des brevets**

(11) **EP 4 528 373 A1**

(12) **EUROPEAN PATENT APPLICATION**
published in accordance with Art. 153(4) EPC

(43) Date of publication:
26.03.2025  Bulletin 2025/13

(51) International Patent Classification (IPC):
**G03B 9/06** (2021.01)

(21) Application number: 23870103.1

(52) Cooperative Patent Classification (CPC):
**G02B 7/00; G03B 9/06; G03B 30/00; H04N 23/50**

(22) Date of filing: 29.08.2023

(86) International application number:
**PCT/CN2023/115394**

(87) International publication number:
**WO 2024/066860 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.09.2022  CN 202211214491

(71) Applicant: **Huawei Technologies Co., Ltd.**
**Shenzhen, Guangdong 518129 (CN)**

(72) Inventors:
• **LI, Zhangcheng**
  **Shenzhen, Guangdong 518129 (CN)**
• **FENG, Minyang**
  **Shenzhen, Guangdong 518129 (CN)**

(74) Representative: **Maiwald GmbH**
**Engineering**
**Elisenhof**
**Elisenstrasse 3**
**80335 München (DE)**

(54) **IRIS DIAPHRAGM, CAMERA MODULE, AND ELECTRONIC DEVICE**

(57) A variable aperture (60), a camera module (100), and an electronic device (1) are provided. The variable aperture (60) includes a fastening base (601), a rotatable support (603), and a variable stop (605). The rotatable support (603) is rotatably accommodated in the fastening base (601). The rotatable support (603) encloses a space (630). The variable stop (605) includes M blades (65), the M blades (65) jointly enclose a light transmission hole (650), and the light transmission hole (650) communicates with the space (630). Each blade (65) is rotatably connected to the fastening base (601), and is slidably connected to the rotatable support (603). M is a positive integer not less than 2. A positioning protruding part (622) is disposed on an inner surface that is of the fastening base (601) and that faces the rotatable support (603), and/or a positioning protruding part (622) is disposed on an outer surface that is of the rotatable support (603) and that faces the fastening base (601), and the fastening base (601) is capable of being in contact with the rotatable support (603) through the positioning protruding part (622). This reduces an assembly tolerance between the rotatable support (603) and the fastening base (601), reduces a difference of a size of the aperture in various postures caused by shaking of the camera module (100), and improves an imaging effect of the camera module (100) and quality of a shot image.

FIG. 9b

## Description

This application claims priority to Chinese Patent Application No. 202211214491.0, filed with the China National Intellectual Property Administration on September 30, 2022 and entitled "VARIABLE APERTURE, CAMERA MODULE, AND ELECTRONIC DEVICE", which is incorporated herein by reference in its entirety.

## TECHNICAL FIELD

This application relates to the field of image shooting technologies, and in particular, to a variable aperture, a camera module, and an electronic device.

## BACKGROUND

In recent years, major manufacturers impose stricter requirements on imaging quality of camera modules. A hole diameter of an aperture hole of a variable aperture is changed to adjust a luminous flux entering the variable aperture, to improve imaging quality of a camera module. The variable aperture includes a plurality of blades, a rotatable support, and a fastening base. The rotatable support is rotatably accommodated in the fastening base. The rotatable support is configured to drive the blades to move, to change a hole diameter of a light transmission hole enclosed by the plurality of blades. However, an assembly tolerance between the rotatable support and the fastening base is large. Consequently, when the camera module shakes, a posture of the rotatable support is likely to be changed, thereby affecting an imaging effect of the camera module.

## SUMMARY

This application provides a variable aperture, a camera module, and an electronic device that can improve imaging effect.

According to a first aspect, an embodiment of this application provides a variable aperture, including a fastening base, a rotatable support, and a variable stop. The rotatable support is rotatably accommodated in the fastening base. The rotatable support encloses a space. The variable stop includes M blades, the M blades jointly enclose a light transmission hole, and the light transmission hole communicates with the space. Each blade is rotatably connected to the fastening base, and is slidably connected to the rotatable support. M is a positive integer not less than 2. A positioning protruding part is disposed on an inner surface that is of the fastening base and that faces the rotatable support, and/or a positioning protruding part is disposed on an outer surface that is of the rotatable support and that faces the fastening base, and the fastening base is capable of being in contact with the rotatable support through the positioning protruding part.

The positioning protruding part is configured to position the rotatable support, to reduce a gap between the rotatable support and a fastening support, and reduce an assembly tolerance between the rotatable support and the fastening support. When the variable aperture is used in a camera module, because the fastening support is in contact with the rotatable support through the positioning protruding part, the positioning protruding part limits shaking of the rotatable support on a plane roughly perpendicular to a central axis of the variable aperture, to reduce a difference of a size of the aperture in various postures caused by shaking of the camera module, and improve an imaging effect of the camera module and quality of a shot image.

In a conventional setting, a ball is disposed between the fastening base and the rotatable support, to reduce an assembly tolerance between the fastening base and the rotatable support. Because the fastening base and the rotatable support each need to be provided with a groove for accommodating the ball, strength of the fastening base and strength of the rotatable support are likely to be reduced.

According to the variable aperture provided in this application, when the positioning protruding part is disposed on the inner surface that is of the fastening base and that faces the rotatable support, and/or the positioning protruding part is disposed on the outer surface that is of the rotatable support and that faces the fastening base, because a groove for accommodating a ball does not need to be disposed, strength of the rotatable support and strength of the fastening base are not affected. In comparison with a variable aperture in a ball manner, the variable aperture in this application needs no ball. This helps simplify a structure of the variable aperture, simplify assembly steps of the variable aperture, and reduce manufacturing costs of the variable aperture.

According to the first aspect, in a possible implementation, the positioning protruding part has a contact surface, the rotatable support is in contact with the fastening base through the contact surface, and the contact surface is a curved surface, to reduce friction generated when the rotatable support rotates relative to the fastening support, improve smoothness of rotation of the rotatable support relative to the fastening support, and improve working efficiency of the variable aperture. The curved surface includes a spherical surface, a cylindrical surface, or the like.

According to the first aspect, in a possible implementation, lubricant oil or a lubricant film layer is disposed on the contact surface, to further reduce friction generated when the rotatable support rotates relative to the fastening support, and improve smoothness of rotation of the rotatable support relative to the fastening support. The lubricant film layer covers the contact surface, and the lubricant film layer may be polytetrafluoroethylene or another film layer having a lubrication function.

According to the first aspect, in a possible implementation, the fastening base includes a base and a fastening support that are stacked and fastened to each other. The rotatable support is rotatably accommodated in the fastening support. The positioning protruding part is disposed on an inner surface that is of the fastening support and that faces the rotatable support and/or the outer surface that is of the rotatable support and that faces the fastening support.

The fastening base includes the base and the fastening support that are separately disposed, to facilitate assembly and disassembly of the variable aperture.

According to the first aspect, in a possible implementation, a first stopper is disposed on an inner surface that is of the base and that faces the rotatable support, and the first stopper is in contact with a bottom that is of the rotatable support and that is far away from the variable stop.

A surface of the first stopper may be used as a first collision surface. When the variable aperture is used in the camera module, if the variable aperture collides with another component of the camera module, a bottom surface of the rotatable support is unlikely to collide with the another component of the camera module. In this case, a force is unlikely to cause deformation of the rotatable support, to ensure that the variable aperture has better reliability.

According to the first aspect, in a possible implementation, each blade has an inner edge, the inner edge includes N connection edges, N connection edges of the M blades are configured to form side edges of the light transmission hole, and the light transmission hole is polygonal, where N is a positive integer not less than 2.

In a conventionally set variable aperture, a side edge that is of a blade and that is used to form a light transmission hole is a single edge (for example, a single straight-line structure or an arc structure), and a light transmission hole formed by M blades is at most M-gonal. Generally, a quantity of blades is set to an even number less than 10. Due to light scattering and/or diffraction, and the like, a starburst is formed on each side edge of a light spot formed through the light transmission hole. As a result, when the camera module using the variable aperture shoots an image including a point light source, several very obvious starbursts are generated on a light spot correspondingly formed by the point light source. Consequently, the light spot is in an irregular shape, and an imaging effect of the camera module is affected.

This application provides a variable stop with a unique structure, to simplify a structure, reduce obvious starbursts of a light spot, and avoid an irregular shape of the light spot. In this implementation, because each blade includes the N connection edges, the M blades can be spliced into a light transmission hole that is at most (M*N)-gonal. The (M*N)-gonal light transmission hole tends to be a round hole. There are at least (M*N) starbursts in a light spot that can be formed through the (M*N)-gonal light transmission hole. In comparison with a conventional variable stop with a same quantity of blades, the variable stop in this application increases a quantity of starbursts in a light spot formed by the variable stop. In this way, a diffraction effect is enhanced, diffraction energy is effectively diverged, intensity of the starbursts is weakened, and a possibility of an irregular shape of the light spot is reduced, thereby improving an imaging effect and image quality of the camera module.

From another perspective, in comparison with a conventional variable stop where a light transmission hole has a same quantity of side edges, the variable stop provided in this application has a smaller quantity of blades and a simpler structure.

According to the first aspect, in a possible implementation, two adjacent connection edges are in a transition connection through an arc edge.

In other words, chamfering may be performed at a joint of every two connected connection edges, so that the two connection edges are in a transition connection through an arc. The arc edge may be an arc of an angle R. For example, the arc edge may be an arc of 15 degrees. A size of the angle R is not limited in this application. Transition of the arc edge results in different angles of diffraction generated by blades. When the angles of diffraction are different, starbursts of a light spot are in a radial shape at the end. When a shape of the light spot is close to a circle, divergence is large, so that the imaging effect and the image quality of the camera module can be improved.

According to the first aspect, in a possible implementation, the connection edge is of a straight-line structure.

According to the first aspect, in a possible implementation, each blade has the inner edge, the inner edge includes the connection edges, the connection edges of the M blades are configured to form the side edges of the light transmission hole, and the connection edge is of a serrated structure. The serrated structure is equivalent to including a plurality of edge sub-segments. In this way, a diffraction effect is enhanced.

According to the first aspect, in a possible implementation, each blade further includes an outer edge connected to the inner edge. The outer edge includes a first end edge part and a second end edge part that are disposed opposite to each other. The inner edge is connected between the first end edge part and the second end edge part. The N connection edges are located at an end that is of the inner edge and that is closer to the first end edge part. A recess and a protrusion are disposed on a side that is of the first end edge part and that is far away from the inner edge. The recess is recessed toward the inside of the blade. The protrusion protrudes toward the outside of the blade.

The recess and the protrusion are disposed on the side that is of the first end edge part and that is far away from the inner edge, the recess is recessed toward the inside of the blade, and the protrusion protrudes toward the outside of the blade, so that an outer contour of the blade is roughly in a "dolphin" shape. In this way, an overlapping area of the variable aperture when the variable aperture is a small aperture is increased, a possibility of light leakage is reduced, a possibility of mislayering of blades in a moving process is reduced, and an imaging effect is also improved.

The recess may avoid the rotatable support when the variable aperture is in a large aperture state. The protrusion may be disposed to increase an overlapping area that is between the blade and another blade and that is obtained when the variable aperture is in a small aperture state.

According to the first aspect, in a possible implementation, the second end edge part has an arc-shaped edge protruding toward the outside of the blade.

According to the first aspect, in a possible implementation, when the light transmission hole is of a polygonal structure, a quantity of side edges of the light transmission hole is an odd number, and a quantity of starbursts that correspondingly form the light spot is twice the quantity of side edges of the light transmission hole of the variable stop. This is further conducive to diffraction energy divergence, improves an imaging effect, and reduces the possibility of the irregular shape of the light spot.

According to the first aspect, in a possible implementation, when the light transmission hole is of a polygonal structure, a quantity of side edges of the light transmission hole is an even number.

According to the first aspect, in a possible implementation, the fastening base has a plurality of rotating shaft protruding parts spaced from each other, and the rotatable support has a plurality of guiding protruding parts spaced from each other. Each blade is provided with a rotatable hole and a guiding hole that are spaced from each other. The plurality of rotating shaft protruding parts are rotatably connected into rotatable holes of the plurality of blades in a one-to-one correspondence, and the plurality of guiding protruding parts are slidably connected into guiding holes of the plurality of blades in a one-to-one correspondence. The blades are rotatably connected to the fastening support. This helps reduce a movement space of the plurality of blades in a light transmission direction of the light transmission hole. The guiding hole guides and limits movement of the blade, to help improve smoothness of the blade.

According to the first aspect, in a possible implementation, the variable aperture further includes a protective cover. The protective cover includes a first cover body and a second cover body. The first cover body is provided with a plurality of avoidance spaces spaced from each other, to avoid the rotating shaft protruding part and the guiding protruding part. The second cover body fastens the first cover body, and is located on a side that is of the first cover body and that is far away from the blade, and the second cover body is configured to cover the avoidance spaces of the first cover body.

According to the first aspect, in a possible implementation, the first cover body and the second cover body are of an integrated structure. A structure of the protective cover can be simplified, and a quantity of components of the variable aperture can be reduced. In addition, a thickness of a connecting piece or an adhesive layer may be omitted, and a thickness of the protective cover may be reduced, to help implement thinning setting of the variable aperture. Quality of the protective cover may be reduced, to help implement lightweight setting of the variable aperture.

According to the first aspect, in a possible implementation, the first cover body is made of plastic or metal, and the second cover body is made of plastic or metal.

The first cover body may be made of plastic. For example, the first cover body may be made of a polyethylene terephthalate (polyethylene terephthalate, PET) material or a polyimide (polyimide, PI) material. The first cover body is made of plastic, so that costs of the variable aperture can be reduced while a weight of the protective cover is reduced.

The first cover body may be made of a metal material. For example, the first cover body may be made of an aluminum sheet, a steel sheet, an aluminum alloy sheet, a magnesium alloy sheet, or the like. It may be understood that the first cover body is made of an aluminum sheet or a steel sheet. Investment costs of the first cover body are low. The first cover body is made of metal, so that structural strength and a collision resistance capability of the first cover body can be improved. In this way, when the variable aperture falls and collides, the first cover body is unlikely to be damaged or deformed, and reliability of the first cover body is better. In addition, the first cover body is unlikely to squeeze the blade due to damage or deformation, and the blade is unlikely to be damaged or deformed. Therefore, reliability of the blade is better. A service life of the variable aperture is long.

The second cover body may be made of plastic. For example, the second cover body may be made of a polyethylene terephthalate (polyethylene terephthalate, PET) material or a polyimide (polyimide, PI) material. The second cover body is made of plastic, so that costs of the variable aperture can be reduced while a weight of the protective cover is reduced.

The second cover body may be made of metal. For example, the second cover body may be made of an aluminum sheet, a steel sheet, an aluminum alloy, a magnesium alloy, or the like. It may be understood that the second cover body is made of an aluminum sheet or a steel sheet. Investment costs of the second cover body are low. The second cover body is made of metal, so that structural strength and a collision resistance capability of the second cover body can be improved. In this way, when the variable aperture falls and collides, the second cover body is unlikely to be damaged or deformed, and reliability of the second cover body is better.

According to the first aspect, in a possible implementation, a plating layer is disposed on a top surface, an outer peripheral side surface, and an inner peripheral side surface of the second cover body. In this way, the plating layer can improve appearance delicateness of the variable aperture. In a possible implementation, an anti-reflection film is disposed on a surface of the plating layer. The anti-reflection film may eliminate a light flare (flare) problem to a large extent, thereby improving appearance delicateness of the variable aperture to a large extent.

According to the first aspect, in a possible implementation, the variable aperture further includes a flexible circuit board, a first magnet, and a first coil. The flexible circuit board surrounds an outer peripheral side surface of the fastening base and is fastened to the outer peripheral side surface of the fastening base. The first coil is fastened to an inner peripheral side surface of the flexible circuit board and is electrically connected to the flexible circuit board. The first magnet is fastened to an outer peripheral side surface of the rotatable support. The first coil faces the first magnet. The first magnet is configured to cooperate with the first coil to drive the rotatable support to rotate relative to the fastening base. Each blade slides relative to the rotatable support and rotates relative to the fastening base, to change a hole diameter of the light transmission hole of the M blades.

In this implementation, the first magnet is fastened to the outer peripheral side surface of the rotatable support, and the first coil is fastened to the fastening base. Therefore, when the first coil is energized, the first magnet is subject to an acting force, and the first magnet may drive the rotatable support to rotate relative to the fastening base. It may be understood that, for a structure of a driving apparatus including the first magnet and the first coil, a conducting wire does not need to be disposed between the rotatable support and the fastening base, and the structure of the driving apparatus including the first magnet and the first coil is simple and neat. In addition, the first magnet and the first coil do not need to move to pull the rotatable support to rotate. In this way, the variable aperture does not need to provide an additional space for the first magnet and the first coil to move. A space occupied by the first magnet and the first coil is small, to facilitate miniaturization of the variable aperture.

In this implementation, the first magnet is fastened to the outer peripheral side surface of the rotatable support, and the first coil is disposed facing the first magnet. This avoids stacking of the first magnet and the first coil in a thickness direction of the camera module. In addition, the first magnet, the first coil, the fastening base, and the rotatable support may be arranged more compactly. In addition, in comparison with a solution in which the first coil is tiled on the fastening base, in this implementation, the first coil is vertically fastened to the fastening base, so that a space of the rotatable support in a Z-axis direction can be used, and an area occupied by the first coil on an X-Y plane may be small.

According to the first aspect, in a possible implementation, the fastening base is provided with a first through hole, and the first coil passes through the first through hole and faces the first magnet.

According to the first aspect, in a possible implementation, a side surface of the fastening base is provided with a first adhesive groove, an adhesive layer is disposed in the first adhesive groove, and the adhesive layer is further connected to the flexible circuit board.

It may be understood that when the flexible circuit board is fastened to the fastening base, the flexible circuit board may cover the first glue groove. The adhesive layer is disposed in the first adhesive groove, and the adhesive layer connects the flexible circuit board and a groove wall of the first adhesive groove, to further improve firmness of a connection between the flexible circuit board and the fastening base.

According to the first aspect, in a possible implementation, the variable aperture further includes a first gasket. The first gasket is fastened to the rotatable support and is located on a side that is of the plurality of blades and that faces the rotatable support. An inner edge of the first gasket encloses a light transmission hole. The light transmission hole of the plurality of blades communicates with the space of the rotatable support through the light transmission hole of the first gasket. The variable aperture includes an initial state, an intermediate state, and an end state. When the variable aperture is in the initial state or the intermediate state, a maximum hole diameter of the light transmission hole of the plurality of blades is less than a hole diameter of the light transmission hole of the first gasket. When the variable aperture is in the end state, a minimum hole diameter of the light transmission hole of the plurality of blades is greater than or equal to the hole diameter of the light transmission hole of the first gasket.

The first gasket is disposed between the plurality of blades and the rotatable support, so that a possibility that the rotatable support scratches the blades can be reduced. When the variable aperture is in the end state, the light transmission hole of the first gasket is exposed relative to each blade, and the hole diameter of the light transmission hole of the plurality of blades is greater than the hole diameter of the light transmission hole of the first gasket. In this case, the light transmission hole of the first gasket forms an aperture hole of the variable aperture. The first gasket in this implementation has a "multi-purpose" effect.

According to a second aspect, an embodiment of this application provides a camera module. The camera module includes a lens assembly and the variable aperture described above. The variable aperture is fastened to the lens assembly and is located on a light incidence side of the lens assembly. It may be understood that when the variable aperture is used in the camera module, the camera module has a long service life and better reliability.

In a possible implementation, the lens assembly includes a motor and a lens. The lens is disposed on the motor. The motor is configured to drive the lens to move in an optical axis direction of the camera module. The variable aperture is fastened to the lens and is located on a light incidence side of the lens.

According to a third aspect, an embodiment of this application provides an electronic device. The electronic device includes a housing and the foregoing camera module, and the camera module is disposed on the housing. It may be understood that when the camera module is used in the electronic device, the electronic device has a long service life and better reliability.

**BRIEF DESCRIPTION OF DRAWINGS**

To describe the technical solutions in embodiments of this application, the following describes the accompanying drawings used in embodiments of this application.

FIG. 1 is a diagram of a structure of an electronic device according to an implementation of this application;

FIG. 2 is a sectional view of a part of the electronic device shown in FIG. 1 at a line A-A;

FIG. 3 is an exploded view of a part of a camera module of the electronic device shown in FIG. 1;

FIG. 4 is a three-dimensional diagram of a variable aperture of a camera module according to an implementation of this application;

FIG. 5 is a sectional view of a variable aperture of a camera module according to an implementation of this application;

FIG. 6 is an exploded view of a part of the variable aperture shown in FIG. 4;

FIG. 7 is a three-dimensional diagram of a fastening base of the variable aperture shown in FIG. 4;

FIG. 8 is a diagram of a base of the fastening base shown in FIG. 7;

FIG. 9a is a three-dimensional diagram of a fastening support shown in FIG. 7;

FIG. 9b is a three-dimensional diagram of a fastening support shown in FIG. 7 from another perspective;

FIG. 9c is a bottom view of the variable aperture shown in FIG. 4 without a base;

FIG. 9d is a three-dimensional diagram of a rotatable support on which a positioning protruding part is disposed according to an implementation of this application;

FIG. 10a is a three-dimensional diagram of a rotatable support shown in FIG. 6;

FIG. 10b is a three-dimensional diagram of a rotatable support shown in FIG. 6 from another perspective;

FIG. 11 is a diagram of three-dimensional assembly of a rotatable support shown in FIG. 6 and a first gasket;

FIG. 12 is a three-dimensional diagram of the variable aperture shown in FIG. 4 without a protective cover;

FIG. 13 is a three-dimensional diagram of a variable stop of the variable aperture shown in FIG. 6;

FIG. 14 is a three-dimensional diagram of a blade of the variable stop shown in FIG. 13;

FIG. 15 is a planar diagram of a blade of the variable stop shown in FIG. 13;

FIG. 16a-1 is a diagram of a hexagonal light transmission hole formed by six blades based on conventional settings ;

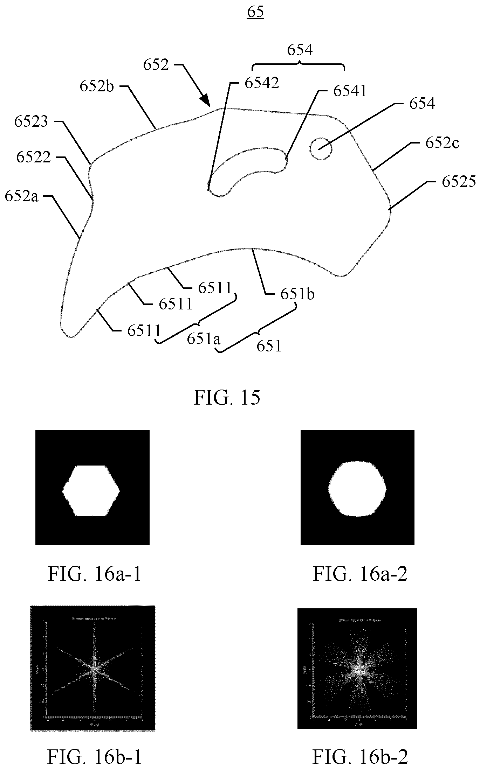

FIG. 16a-2 is a diagram of another hexagonal light transmission hole formed by six blades based on conventional settings ;

FIG. 16b-1 is a diagram of a simulation result for angular spectrum diffraction calculation of a light spot correspondingly formed through the light transmission hole shown in FIG. 16a-1;

FIG. 16b-2 is a diagram of a simulation result for angular spectrum diffraction calculation of a light spot correspondingly formed through the light transmission hole shown in FIG. 16a-2;

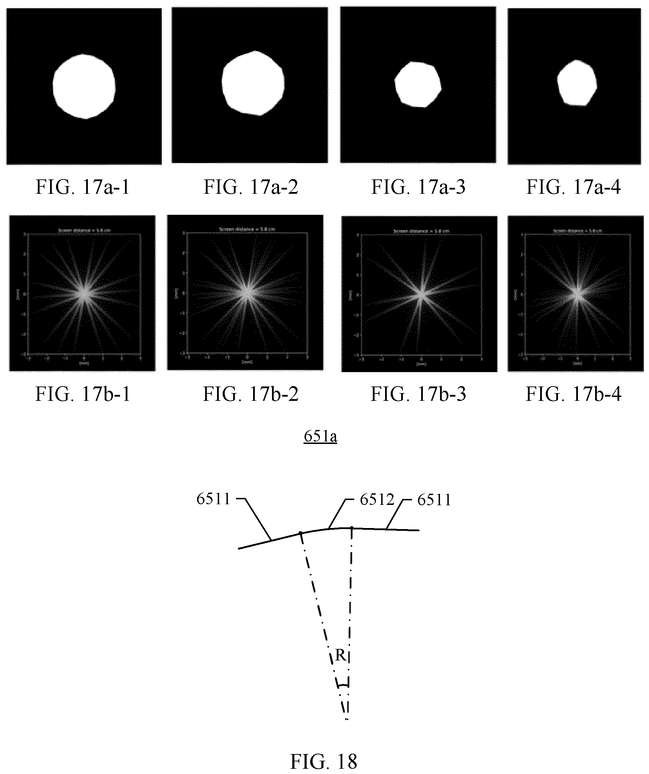

FIG. 17a-1 is a diagram of an 18-gonal non-eccentric light transmission hole formed by six blades when an aperture is 2.0 according to an implementation of this application;

FIG. 17a-2 is a diagram of an 18-gonal eccentric light transmission hole formed by six blades when an aperture is 2.0 according to an implementation of this application;

FIG. 17a-3 is a diagram of an 18-gonal non-eccentric light transmission hole formed by six blades when an aperture is 2.8 according to an implementation of this application;

FIG. 17a-4 is a diagram of an 18-gonal eccentric light transmission hole formed by six blades when an aperture is 2.8 according to an implementation of this application;

FIG. 17b-1 is a diagram of a simulation result for angular spectrum diffraction calculation of a light spot correspondingly formed through the light transmission hole shown in FIG. 17a-1;

FIG. 17b-2 is a diagram of a simulation result for angular spectrum diffraction calculation of a light spot correspondingly formed through the light transmission hole shown in FIG. 17a-2;

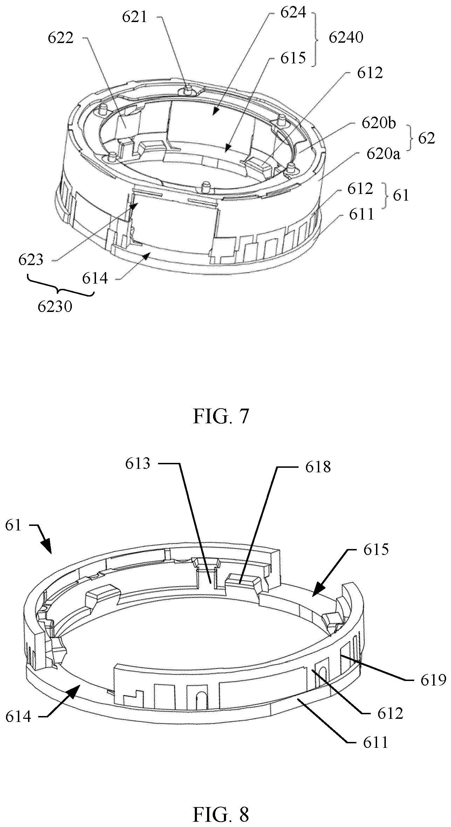

FIG. 7b-3 is a diagram of a simulation result for angular spectrum diffraction calculation of a light spot correspondingly formed through the light transmission hole shown in FIG. 17a-3;

FIG. 17b-4 is a diagram of a simulation result for angular spectrum diffraction calculation of a light spot correspondingly formed through the light transmission hole shown in FIG. 17a-4;

FIG. 18 is a partial diagram of a first edge part of a blade in a possible implementation of this application;

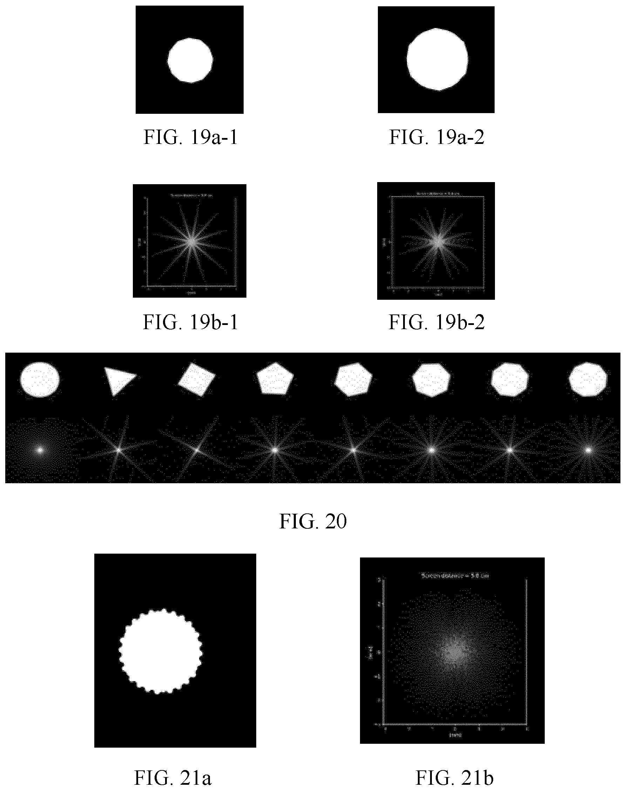

FIG. 19a-1 is a diagram of a 12-gonal light transmission hole formed by six blades according to an implementation of this application, where two connection edges are in a transition connection through one arc edge;

FIG. 19a-2 is a diagram of an 18-gonal light transmission hole formed by six blades according to an implementation of this application, where two connection edges are in a transition connection through one arc edge;

FIG. 19b-1 is a diagram of a simulation result for angular spectrum diffraction calculation of a light spot correspondingly formed through the light transmission hole shown in FIG. 19a-1;

FIG. 19b-2 is a diagram of a simulation result for angular spectrum diffraction calculation of a light spot correspondingly formed through the light transmission hole shown in FIG. 19a-2;

FIG. 20 is a diagram of light transmission holes of seven shapes and simulation results for angular spectrum diffraction calculation of light spots correspondingly formed through the light transmission holes;

FIG. 21a is a diagram of a light transmission hole having a side edge of a serrated structure according to an implementation of this application;

FIG. 21b is a diagram of a simulation result for angular spectrum diffraction calculation of a light spot correspondingly formed through the light transmission hole shown in FIG. 21a;

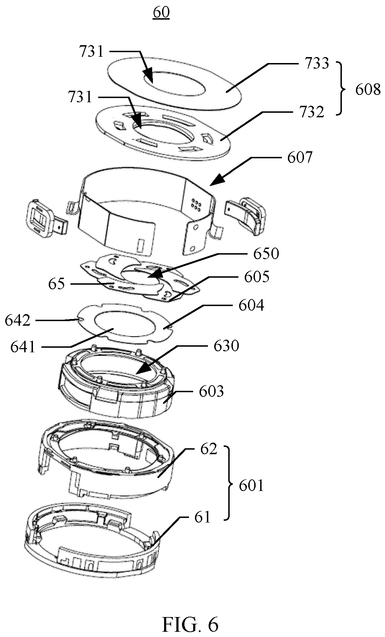

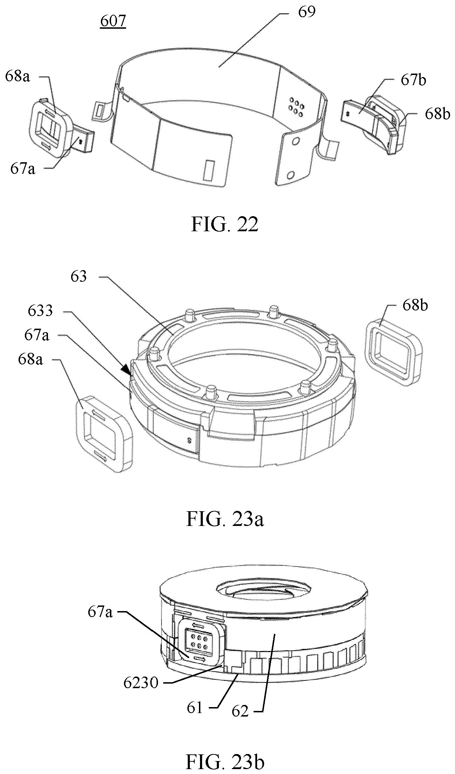

FIG. 22 is a three-dimensional exploded view of a driving component shown in FIG. 6;

FIG. 23a is a diagram of a structure of a driving component and a rotatable support;

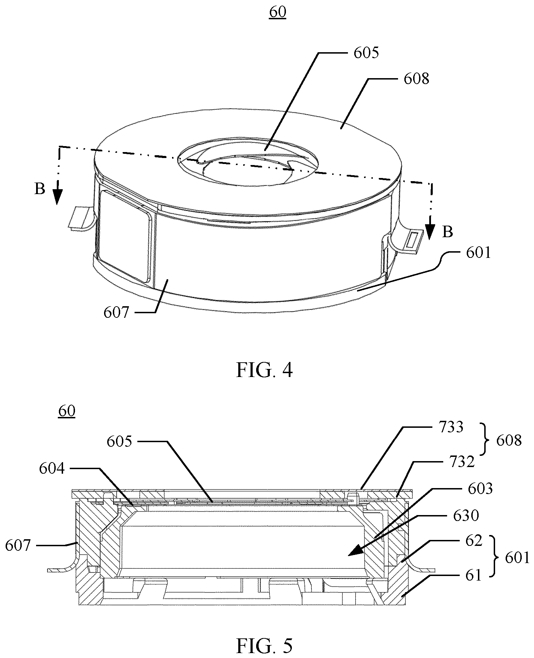

FIG. 23b is a three-dimensional diagram of the variable aperture shown in FIG. 4 without a flexible circuit board;

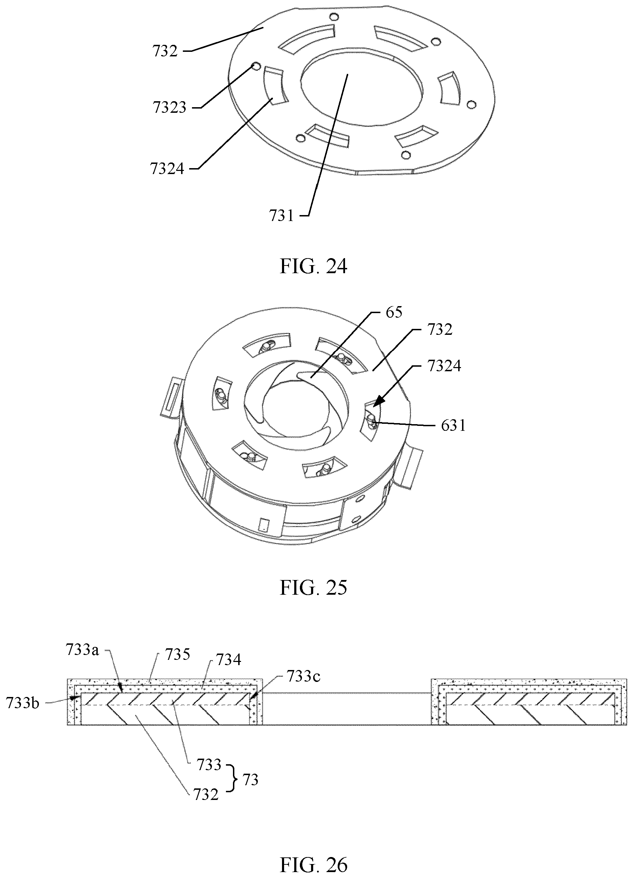

FIG. 24 is a diagram in which a first cover body of the variable aperture shown in FIG. 6 faces a bottom surface of a rotatable support;

FIG. 25 is a three-dimensional diagram of the variable aperture shown in FIG. 4 without a second cover body; and

FIG. 26 is a sectional view of a second cover body in another implementation according to this application.

## DESCRIPTION OF EMBODIMENTS

For ease of understanding, English abbreviations and related technical terms used in embodiments of this application are first explained and described below.

The following describes embodiments of this application with reference to the accompanying drawings in embodiments of this application.

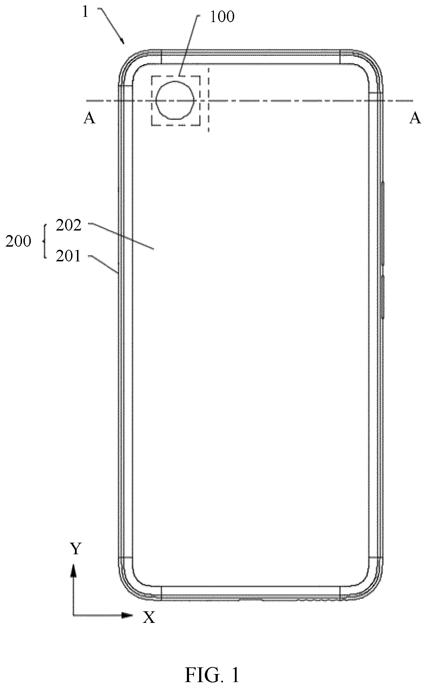

Refer to FIG. 1. An electronic device 1 may be a device having an image shooting function, for example, a mobile phone, a tablet computer (tablet personal computer), a laptop computer (laptop computer), a personal digital assistant (personal digital assistant, PDA), a camera, a personal computer, a notebook computer, a vehicle-mounted device, a wearable device, augmented reality (augmented reality, AR) glasses, an AR helmet, virtual reality (virtual reality, VR) glasses, or a VR helmet. In the embodiment shown in FIG. 1, the electronic device 1 is described by using the mobile phone as an example.

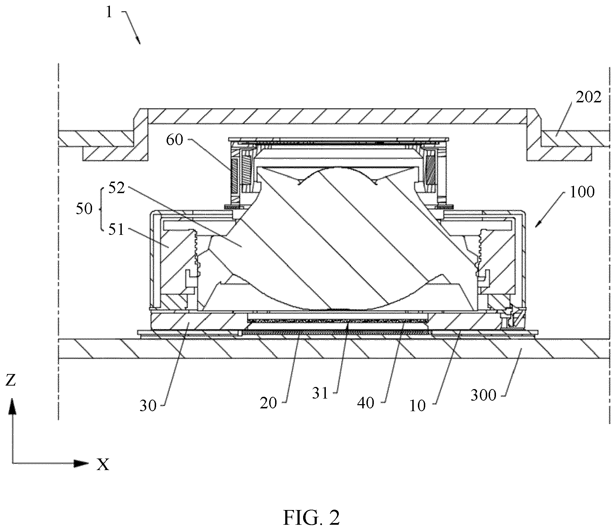

Refer to FIG. 1 and FIG. 2. The electronic device 1 includes a camera module 100, a housing 200, and a screen 300. It should be noted that FIG. 1, FIG. 2, and the following related accompanying drawings merely schematically show some components included in the electronic device 1. Actual shapes, actual sizes, actual positions, and actual structures of these components are not limited by FIG. 1, FIG. 2, and the following accompanying drawings. In addition, because the camera module 100 is an internal structure of the electronic device 1, FIG. 1 schematically shows the camera module 100 by using a dashed line. For ease of description, a width direction of the electronic device 1 is defined as an X axis. A length direction of the electronic device 1 is a Y axis. A thickness direction of the electronic device 1 is a Z axis. It may be understood that a coordinate system of the electronic device 1 may be flexibly set based on a specific actual requirement.

In another embodiment, when the electronic device 1 is a device in another form, the electronic device 1 may not include the screen 300.

For example, the housing 200 includes a host frame 201 and a rear cover 202. The rear cover 202 is fastened to a side of the host frame 201. The screen 300 is fastened to a side that is of the host frame 201 and that is far away from the rear cover 202. The screen 300, the host frame 201, and the rear cover 202 may jointly enclose the interior of the electronic device 1. The interior of the electronic device 1 may be used for placing a component of the electronic device 1, for example, a battery, a receiver, or a microphone. The screen 300 may be configured to display an image and the like. The screen 300 may be a flat screen or a curved screen.

In an implementation, the camera module 100 may be disposed inside the electronic device 1. The camera module 100 may be configured to collect ambient light outside the electronic device 1. It may be understood that the camera module 100 may be a rear-facing camera module, a front-facing camera module, or the like. In addition, the camera module 100 may be a vertical camera module (for example, an optical axis direction of the camera module is a Z-axis direction), or may be a periscope camera module (for example, an optical axis direction of the camera module may be any direction on an X-Y plane). FIG. 2 shows that the camera module 100 is both a rear-facing camera module and a vertical camera module.

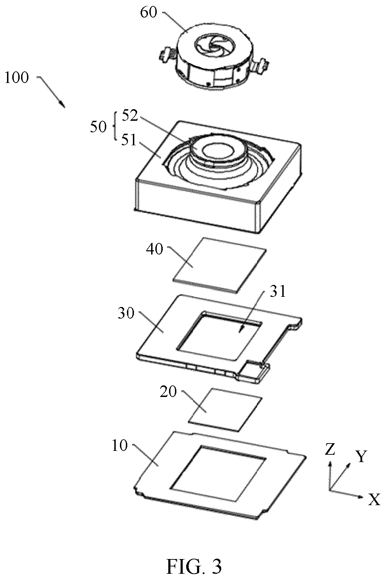

Refer to FIG. 3. In an implementation, the camera module 100 includes a module circuit board 10, a photosensitive chip 20, a bracket 30, a light filter 40, a lens assembly 50, and a variable aperture 60 (also referred to as a variable aperture motor). The photosensitive chip 20 may also be referred to as an image sensor, or may also be referred to as a photosensitive element. The photosensitive chip 20 may be configured to: collect ambient light, and convert image information carried in the ambient light into an electrical signal. It should be noted that an optical axis of the camera module 100 includes an optical axis of the variable aperture 60. In this implementation, both the optical axis direction of the camera module 100 and an optical axis direction of the variable aperture 60 are the Z-axis direction.

Refer to FIG. 2 and FIG. 3. In an implementation, the module circuit board 10 may be fastened to a side that is of the screen 300 and that faces the rear cover 202. The photosensitive chip 20 is fastened to the module circuit board 10, and is electrically connected to the module circuit board 10.

In an implementation, the bracket 30 may be fastened to a side that is of the module circuit board 10 and that is far away from the screen 300. The bracket 30 and the photosensitive chip 20 are located on the same side of the module circuit board 10. For example, the bracket 30 may be fastened to the module circuit board 10 through glue, an adhesive tape, or the like.

In an implementation, the bracket 30 may be provided with a light transmission hole 31. The light transmission hole 31 penetrates two surfaces that are of the bracket 30 and that are disposed opposite to each other. The light filter 40 is fastened to the bracket 30, and the light filter 40 is located in the light transmission hole 31. The light filter 40 is disposed opposite to the photosensitive chip 20. The light filter 40 may be configured to filter stray light of ambient light, to ensure that an image shot by the camera module 100 has better definition. The light filter 40 may be but is not limited to a blue glass filter. For example, the light filter 40 may alternatively be a reflective infrared light filter or a dual-bandpass light filter (the dual-bandpass light filter may allow visible light and infrared light in the ambient light to simultaneously pass through, allow visible light and light of another specified wavelength (for example, ultraviolet light) in the ambient light to simultaneously pass through, or allow infrared light and light of another specified wavelength (for example, ultraviolet light) to simultaneously pass through).

Refer to FIG. 3. The lens assembly 50 may be a prime lens, an auto focus (auto focus, AF) lens, a zoom lens, or the like. The lens assembly 50 in this embodiment is described by using the AF lens as an example. The lens assembly 50 includes a motor 51 and a lens 52. The lens 52 is disposed on the motor 51. The motor 51 is configured to drive the lens 52 to move in the optical axis direction (namely, the Z-axis direction) of the camera module 100. The motor 51 may be a voice coil motor or a shape memory alloy (shape memory alloy, SMA) motor. A specific structure of the motor 51 is not limited in this application.

In an implementation, the motor 51 may be fastened to the bracket 30. The lens 52 is located on a side that is of the light filter 40 and that is far away from the photosensitive chip 20. In this way, the ambient light may propagate to the photosensitive chip 20 through the lens 52 and the light filter 40.

Refer to FIG. 2 and FIG. 3. In an implementation, the variable aperture 60 is located on a light incidence side of the lens 52 of the lens assembly 50, and is fastened to the lens 52 of the lens assembly 50. The variable aperture 60 may be configured to increase or decrease luminous flux entering the lens 52 of the lens assembly 50. For example, when the electronic device 1 performs image shooting in a condition of low light, the variable aperture 60 may increase the luminous flux entering the lens assembly 50. When the electronic device 1 performs image shooting in a condition of sufficient light, the variable aperture 60 may decrease the luminous flux entering the lens assembly 50.

The variable aperture 60 has an aperture hole with an adjustable size. The size of the aperture hole is adjusted to change the luminous flux entering the lens assembly 50. When the size of the aperture hole of the variable aperture 60 and a position of the aperture hole of the variable aperture 60 relative to the lens 52 change, a field of view of the lens 52 accordingly changes. In this implementation, the variable aperture 60 is fastened to the lens 52, so that when the motor 51 drives the lens 52 to move in the Z-axis direction, the variable aperture 60 can also move in the Z-axis direction. In other words, in the process in which the lens 52 moves in the Z-axis direction, a position of the variable aperture 60 relative to the lens 52 does not change. In this way, when another factor that affects the field of view of the lens 52 is not considered and the position of the aperture hole of the variable aperture 60 relative to the lens 52 remains unchanged, the field of view of the lens 52 does not change either.

In another embodiment, the variable aperture 60 may be fastened to another component of the lens assembly 50.

In another embodiment, when the lens assembly 50 is a prime lens, the lens assembly 50 no longer includes the motor 51. In this case, the variable aperture 60 may be directly fastened to a light incidence side of the prime lens.

In this implementation, the variable aperture 60 includes an initial state, an intermediate state, and an end state. The intermediate state is any state between the initial state and the end state. When the variable aperture 60 is in the initial state, the aperture hole of the variable aperture 60 is the smallest, and the luminous flux entering the lens assembly 50 is the smallest. When the variable aperture 60 is in the end state, the aperture hole of the variable aperture 60 is the largest, and the luminous flux entering the lens assembly 50 is the largest. In the following, a structure of the variable aperture 60 in the initial state is used as an example for description.

Refer to FIG. 4, FIG. 5, and FIG. 6. The variable aperture 60 includes a fastening base 601, a rotatable support 603, a first gasket 604, a variable stop 605, a driving component 607, and a protective cover 608. The rotatable support 603 can be rotatably accommodated in the fastening base 601. The rotatable support 603 encloses a space 630. The variable stop 605 is disposed on the fastening base 601 and covers the rotatable support 603. The variable stop 605 is slidably connected to the rotatable support 603. The first gasket 604 is disposed between the rotatable support 603 and the variable stop 605. The driving component 607 is connected to the rotatable support 603, and is configured to drive the rotatable support 603 to rotate relative to the fastening base 601, to change a size of an aperture hole of the variable stop 605. The protective cover 608 covers a side that is of the variable stop 605 and that is far away from the rotatable support 603, and is configured to limit the variable stop 605 and protect and cover an internal component of the variable aperture 60.

It may be understood that, that the rotatable support 603 is accommodated in the fastening base 601 includes: A projection of the rotatable support 603 on a reference plane at least partially overlaps a projection of the fastening base 601 on the reference plane. The reference plane is parallel to the optical axis direction of the variable aperture 60, namely, the Z-axis direction.

Refer to FIG. 7. The fastening base 601 includes a base 61 and a fastening support 62. The fastening support 62 and the base 61 are stacked and fastened to each other. The base 61 and the fastening support 62 jointly enclose an accommodation space for accommodating the rotatable support 603. The base 61 is configured to limit rotation movement of the rotatable support 603. The fastening support 62 is configured to carry the variable stop 605, provide a horizontal limit for rotation of the rotatable support 603, and the like.

In an implementation, the base 61 may include a plastic part and a metal part (for example, a steel sheet). The metal part may be embedded in the plastic part. For example, the base 61 may be formed through an insert molding (insert molding) process. For example, a metal sheet like a steel sheet is placed in a mold for injection molding. In this way, in comparison with a base 61 of a plastic structure, the base 61 in this implementation has better structural strength. When the variable aperture 60 falls and collides, the base 61 is unlikely to be damaged or deformed, and reliability of the base 61 is better. It may be understood that a material of the base 61 is not limited in this application. For example, all materials of the base 61 are plastic.

Refer to FIG. 8. In an implementation, the base 61 includes a bottom wall 611 and a side wall 612. The side wall 612 of the base 61 is fastened to the bottom wall 611 of the base 61. Both the side wall 612 of the base 61 and the bottom wall 611 of the base 61 may be ring-shaped.

A first reinforcement block 613 may be further disposed on the side wall 612 of the base 61, and is configured to enhance strength of the base 61.

In an implementation, the side wall 612 of the base 61 further includes a first notch 614 and a second notch 615 that are spaced from each other. The first notch 614 and the second notch 615 may be disposed opposite to each other. An inner space of the base 61 may communicate to an outer space of the base 61 through both the first notch 614 and the second notch 615.

In an implementation, a first stopper 618 is disposed on the side wall 612 of the base 61, and is configured to be in contact with the rotatable support 603. A plurality of first stoppers 618 are all connected to an inner surface of the side wall 612 of the base 61. There may be a plurality of first stoppers 618, and the plurality of first stoppers 618 are spaced from each other on the side wall 612. For example, a top surface of each first stopper 618 is located on a same plane. The top surface of the first stopper 618 is a surface that is of the first stopper 618 and that is far away from the bottom wall 611 of the base 61.

When the rotatable support 603 is accommodated in the fastening base 601, a bottom surface that is of the rotatable support 603 and that is far away from the variable stop 605 may be in contact with the first stopper 618 of the base 61. It may be understood that a surface of the first stopper 618 may be used as a first collision surface. When the variable aperture 60 (refer to FIG. 2) is used in the camera module 100 (refer to FIG. 2), if the variable aperture 60 collides with another component of the camera module 100, the bottom surface of the rotatable support 603 is unlikely to collide with the another component of the camera module 100. In this case, a force is unlikely to cause deformation of the rotatable support 603, to ensure that the variable aperture 60 has better reliability. In another implementation, the rotatable support 603 may alternatively be spaced from the first stopper 618 of the base 61.

In an implementation, a first adhesive groove 619 or an adhesive dispensing path is provided on the side wall 612 of the base 61, and is used for disposing a colloid, so that the base 61 is connected to a part of the driving component 607.

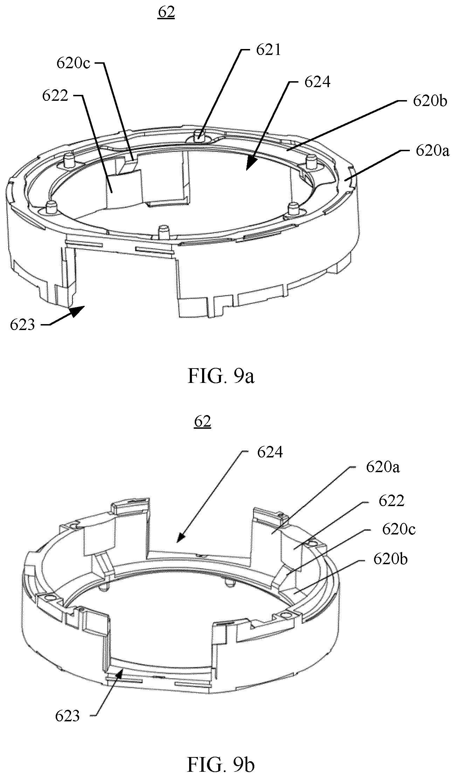

Refer to FIG. 9a and FIG. 9b. In an implementation, a material of the fastening support 62 may include a plastic part and a metal part (for example, a steel sheet). The metal part may be embedded in the plastic part. For example, the fastening support 62 may be formed through an insert molding (insert molding) process. For example, a metal material like a steel sheet is placed in a mold for injection molding. In this way, in comparison with a fastening support of a plastic structure, the fastening support 62 in this implementation has better structural strength. When the variable aperture 60 falls and collides, the fastening support 62 is unlikely to be damaged or deformed, and reliability of the fastening support 62 is better.

In an implementation, the fastening support 62 may be ring-shaped. The fastening support 62 includes an outer ring part 620a and an inner ring part 620b. The inner ring part 620b is connected to an inner surface of the outer ring part 620a. The outer ring part 620a is fastened to the side wall 612 of the base 61.

In some possible implementations, the fastening support 62 may be connected to the base 61 through a mortise-and-tenon joint process. In addition, an adhesive layer may be disposed at a connection position between the fastening support 62 and the base 61, to further improve firmness of a connection between the fastening support 62 and the base 61.

For example, a top surface that is of the outer ring part 620a and that is far away from the base 61 and a top surface of the inner ring part 620b may form a stepped shape. In other words, in the Z-axis direction, a height of the top surface of the outer ring part 620a is greater than a height of the top surface of the inner ring part 620b.

In an implementation, the fastening support 62 further includes a plurality of second reinforcement blocks 620c spaced from each other. The second reinforcement blocks 620c are connected to the inner surface of the outer ring part 620a and a bottom surface of the inner ring part 620b. The second reinforcement blocks 620c may enhance firmness of a connection between the inner ring part 620b and the outer ring part 620a. The inner surface of the outer ring part 620a is a surface that is of the outer ring part 620a and that is disposed facing the rotatable support 603.

In an implementation, the inner ring part 620b of the fastening support 62 has a plurality of rotating shaft protruding parts 621 that are spaced from each other and are configured to be rotatably connected to the variable stop 605. The plurality of rotating shaft protruding parts 621 may be arranged in a ring shape. For example, there are six rotating shaft protruding parts 621.

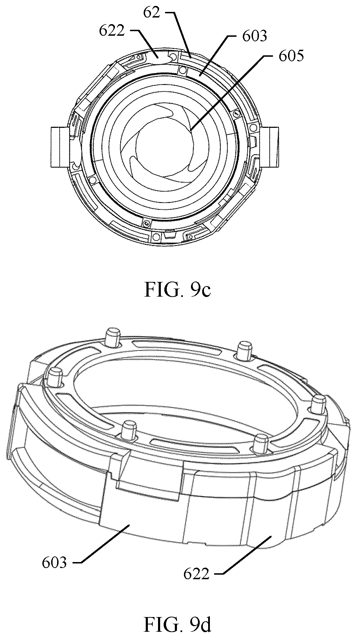

In an implementation, a positioning protruding part 622 is further disposed on the fastening support 62. Refer to FIG. 9c. The positioning protruding part 622 protrudes from the inner surface of the outer ring part 620a of the fastening support 62, and the positioning protruding part 622 is in contact with the rotatable support 603. The positioning protruding part 622 is configured to position the rotatable support 603, to reduce a gap between the rotatable support 603 and the fastening support 62, and reduce an assembly tolerance between the rotatable support 603 and the fastening support 62. Because the fastening support 62 is in contact with the rotatable support 603 through the positioning protruding part 622, the positioning protruding part 622 limits shaking of the rotatable support 603 on the X-Y plane (a plane that is approximately perpendicular to a central axis of the variable aperture), to reduce a difference of a size of the aperture in various postures caused by shaking of the camera module 100, and improve an imaging effect of the camera module 100 and quality of a shot image.

In an implementation, the positioning protruding part 622 has a contact surface disposed facing the rotatable support 603, and the contact surface is configured to be in contact with the rotatable support 603. The contact surface is a curved surface. In this implementation, the contact surface is a cylindrical surface, to reduce friction between the rotatable support 603 and the fastening support 62. There are two positioning protruding parts 622, and an included angle between a central axis of the first positioning protruding part 622 and the fastening support 62 and a central axis of the second positioning protruding part 622 and the fastening support 62 is approximately a right angle. In another implementation, a quantity and positions of the positioning protruding parts 622 are not specifically limited, and a structure of the contact surface is not limited. For example, the contact surface may alternatively be a spherical surface.

In an implementation, lubricant oil is disposed on the positioning protruding part 622. The lubricant oil can reduce a friction force between the positioning protruding part 622 and the rotatable support 603.

In another implementation of this application, a lubricant film layer is disposed on the positioning protruding part 622. The lubricant film layer covers the contact surface, and the lubricant film layer may be polytetrafluoroethylene or another film layer having a lubrication function. The lubricant film layer can reduce a friction force between the fastening base 601 and the rotatable support 603.

In another implementation of this application, the positioning protruding part 622 may be omitted from the fastening support 62. A positioning protruding part 622 may be disposed on an outer surface that is of the rotatable support 603 and that faces the fastening base 601, and a contact surface is disposed on an outer surface that is of the positioning protruding part 622 and that faces the rotatable support 603. As shown in FIG. 9d, the rotatable support 603 can be in contact with the fastening support 62 through the positioning protruding part 622. The positioning protruding part 622 disposed on the outer surface of the rotatable support 603 can also limit movement of the rotatable support 603 on the X-Y plane.

In another implementation of this application, a positioning protruding part 622 is disposed on the inner surface of the outer ring part 620a of the fastening support 62, and a positioning protruding part 622 is also disposed on the outer surface that is of the rotatable support 603 and that faces the fastening base 601. A disposing position of the positioning protruding part 622 of the fastening support 62 and a disposing position of the positioning protruding part 622 of the rotatable support 603 are not limited in this application, provided that each positioning protruding part 622 does not affect rotation of the rotatable support 603 relative to the fastening support 62.

It may be understood that the base 61 and the fastening support 62 may be integrally disposed, and the positioning protruding part 622 may be disposed on an inner surface that is of the fastening base 601 and that faces the rotatable support 603.

In a conventional setting, a ball is disposed between the fastening base and the rotatable support, to reduce an assembly tolerance between the fastening base and the rotatable support. Because the fastening base and the rotatable support each need to be provided with a groove for accommodating the ball, strength of the fastening base and strength of the rotatable support are likely to be reduced.

According to the variable aperture 60 provided in this application, the positioning protruding part 622 is disposed on the inner surface that is of the fastening base 601 and that faces the rotatable support 603, and/or the positioning protruding part 622 is disposed on the outer surface that is of the rotatable support 603 and that faces the fastening base 601. Because the groove for accommodating the ball does not need to be disposed, the strength of the rotatable support 603 and the strength of the fastening base 601 are not affected. In comparison with a variable aperture in a ball manner, the variable aperture in this application needs no ball. This simplifies a structure of the variable aperture 60, simplifies assembly steps of the variable aperture 60, and reduces manufacturing costs of the variable aperture 60.

Refer to FIG. 9a and FIG. 9b again. In an implementation, the outer ring part 620a of the fastening support 62 is further provided with a third notch 623 and a fourth notch 624 that are spaced from each other. The third notch 623 and the fourth notch 624 are disposed opposite to each other. An internal space of the fastening support 62 may communicate to an external space of the fastening support 62 through both the third notch 623 and the fourth notch 624. When the fastening support 62 is fastened to the base 61, the first notch 614 and the third notch 623 are spliced into a first through hole 6230 (as shown in FIG. 7) for passing of a part of the driving component 607. The second notch 615 and the fourth notch 624 are spliced into a second through hole 6240 (as shown in FIG. 7) for passing of a part of the driving component 607.

In some other implementations, a second stopper may be disposed on the outer ring part 620a of the fastening support 62. The second stopper may be connected to the top surface of the outer ring part 620a. There may be one, two, or more second stoppers. For example, top surfaces of a plurality of second stoppers are located on a same plane. A top surface of the second stopper is a surface that is of the second stopper and that is far away from the outer ring part 620a of the fastening support 62. When the rotatable support 603 is accommodated in the fastening base 601, the first stopper 618 may limit movement of the rotatable support 603 in a negative direction of a Z-axis. The protective cover 608 may be used to limit movement of the rotatable support 603 in a positive direction of the Z-axis (the optical axis direction). In this way, the second stopper and the protective cover 608 cooperate with each other, so that movement of the rotatable support 603 can be limited, and an amplitude of shaking of the rotatable support 603 can be reduced. Further, after a collision occurs on the variable aperture 60, impact of a change of a gap between the variable stop 605 and the protective cover 608 due to the collision can be reduced.

In some possible implementations, the base 61 may be connected to the fastening support 62 a plug-connection manner. For example, a plurality of first plug-connection parts spaced from each other are disposed on the side wall 612 of the base 61, a plurality of second plug-connection parts spaced from each other are disposed on the outer ring part 620a of the fastening support 62, and the first plug-connection parts are plug-connected to the second plug-connection parts. The first plug-connection parts are protrusions, and the second plug-connection parts are grooves. Openings of the plurality of second plug-connection parts are located on a bottom surface of the outer ring part 620a of the fastening support 62. When the fastening support 62 fastens the base 61, the plurality of first plug-connection parts of the base 61 are inserted into the plurality of second plug-connection parts of the fastening support in a one-to-one correspondence. The first plug-connection parts may be in interference fit with groove walls of the second plug-connection parts. Through fitting between the first plug-connection parts and the second plug-connection parts, firmness of the connection between the fastening support and the base can be improved, thereby ensuring better stability of the fastening support and the base. For example, buckling ribs may be further convexly disposed on outer walls of the first plug-connection parts and/or inner walls of the second plug-connection parts, and the first plug-connection parts are in interference fit with the groove walls of the second plug-connection parts through the buckling ribs, to increase a binding force through interference assembly. When the fastening support 62 is assembled on the base 61, the first plug-connection parts are directly inserted into the corresponding second plug-connection parts. This helps reduce an assembly tolerance, improve assembly precision, and greatly simplify an assembly process. Each first plug-connection part may be provided with an adhesive groove for accommodating a colloid. A groove wall of each second plug-connection part 626b may be further provided with an adhesive groove for accommodating a colloid. The firmness of the connection between the fastening support 62 and the base 61 can be further improved through colloid bonding, to further ensure better stability of the fastening support 62 and the base 61. It may be understood that the first plug-connection part may be a groove, and the second plug-connection part may be a protrusion.

It may be understood that the base 61 may alternatively be connected to the fastening support 62 in another manner, for example, fastened through a fastener or bonded through a colloid. This is not limited in this application.

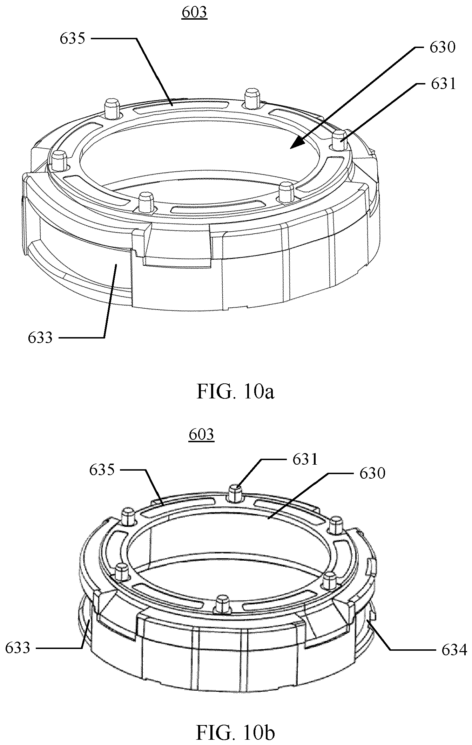

Refer to FIG. 10a and FIG. 10b. The rotatable support 603 may be ring-shaped. The rotatable support 603 encloses the space 630. A plurality of guiding protruding parts 631 spaced from each other are disposed on the top of the rotatable support 603, and are configured to be connected to the first gasket 604. The plurality of guiding protruding parts 631 may be arranged in a ring shape, and are configured to be connected to the variable stop 605. For example, there are six guiding protruding parts 631. The guiding protruding parts 631 may be of a columnar structure.

For example, a first mounting groove 633 and a second mounting groove 634 (not shown in the figure) that are spaced from each other are further disposed on an outer peripheral side surface of the rotatable support 603, and are used for mounting a part of the driving component 607. The outer peripheral side surface of the rotatable support 603 may be parallel to the optical axis direction of the variable aperture 60.

For example, the rotatable support 603 is further provided with a plurality of adhesive storage grooves 635 spaced from each other. Openings of the adhesive storage grooves 635 are located on a top surface of the rotatable support 603. The top surface of the rotatable support 603 is disposed facing the variable stop 605 and the protective cover 608. A quantity of adhesive storage grooves 635 is not limited to six shown in FIG. 10a and FIG. 10b.

It may be understood that the rotatable support 603 may be of a symmetrical structure, a partially symmetrical structure, or an asymmetrical structure. In this implementation, the rotatable support 603 is of a symmetrical structure.

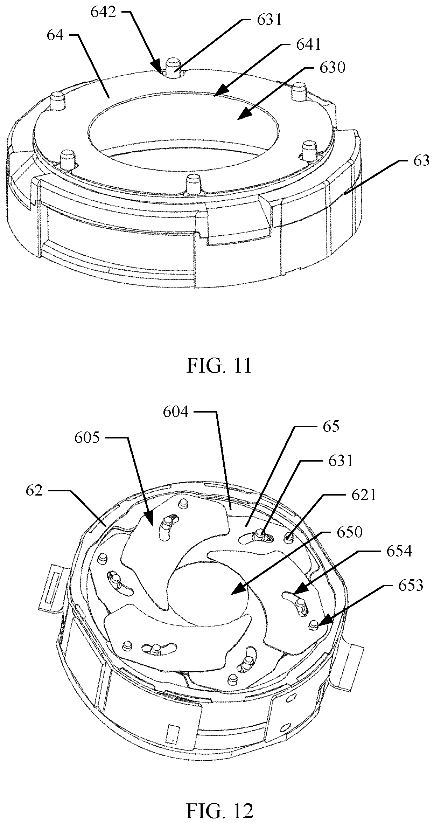

Refer to FIG. 11. In an implementation, the first gasket 604 may be ring-shaped. The first gasket 604 has a light transmission hole 641. The light transmission hole 641 of the first gasket 604 communicates with the space 630 of the rotatable support 603. A hole diameter of the light transmission hole 641 of the first gasket 604 remains unchanged. The light transmission hole 641 of the first gasket 604 may be used as a level of the aperture hole of the variable aperture 60. In this implementation, the light transmission hole 641 of the first gasket 604 may be used as an aperture hole obtained when the variable aperture 60 is in the end state. For example, the first gasket 604 is provided with a plurality of fastening holes 642 spaced from each other. For example, a quantity of fastening holes 642 is equal to a quantity of guiding protruding parts 631 of the rotatable support 603. In other words, there are six fastening holes 642. In addition, the plurality of fastening holes 642 may be located around the light transmission hole 641 of the first gasket 604, and are disposed around the light transmission hole 641 of the first gasket 604.

In an implementation, the first gasket 604 is fastened to the top of the rotatable support 603. For example, the plurality of guiding protruding parts 631 of the rotatable support 603 pass through the plurality of fastening holes 642 of the first gasket 604 in a one-to-one correspondence, that is, one guiding protruding part 631 passes through one fastening hole 642. It may be understood that the first gasket 604 is unlikely to shake on the X-Y plane through fitting between the fastening holes 642 of the first gasket 604 and the guiding protruding parts 631 of the rotatable support 603.

In an implementation, an adhesive layer is disposed in the adhesive storage grooves 635 of the rotatable support 603. The adhesive layer connects the rotatable support 603 and the first gasket 604, so that the first gasket 604 is more stably and firmly connected to the rotatable support 603. In this case, the first gasket 604 is unlikely to be detached from the rotatable support 603.

In an implementation, a central axis of the light transmission hole 641 of the first gasket 604 coincides with a central axis of the rotatable support 603. The central axis of the light transmission hole 641 of the first gasket 604 indicates a virtual axis that passes through a center of the light transmission hole 641 of the first gasket 604 and that is perpendicular to a plane on which the first gasket 604 is located. In another embodiment, the central axis of the light transmission hole 641 of the first gasket 604 may alternatively not coincide with the central axis of the rotatable support 603.

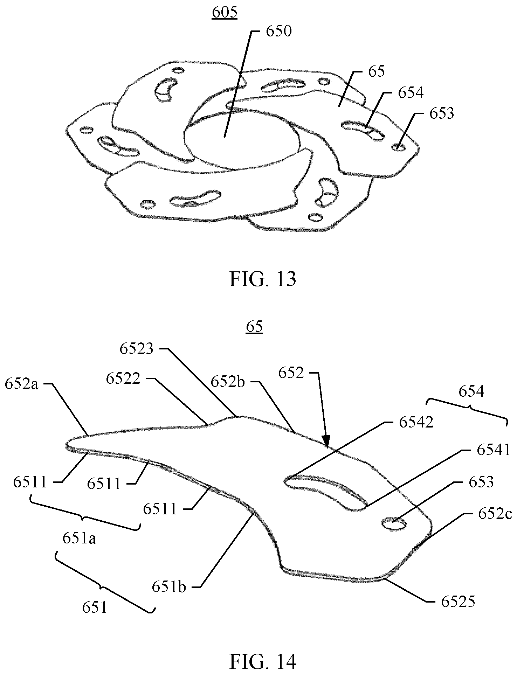

Refer to FIG. 12. The variable stop 605 is located on a side that is of the first gasket 604 and that is far away from the rotatable support 603. Refer to FIG. 13. The variable stop 605 includes M blades 65, where M is a positive integer not less than 2. The M blades 65 are configured to jointly enclose a light transmission hole 650. The light transmission hole 650 communicates with the light transmission hole 641 (refer to FIG. 11) of the first gasket 604. The plurality of blades 65 are located on the top that is of the first gasket 604 and that is far away from the base 61. Each blade 65 can move on a plane that intersects a light transmission direction of the light transmission hole 650 to change a hole diameter of the light transmission hole 650. In this implementation, the blade 65 is rotatably connected to a rotating shaft protruding part 621 of the fastening support 62, and is slidably connected to the guiding protruding part 631 of the rotatable support 603.

In this embodiment, one of the blades 65 is used as an example to describe a structure of the blade 65 in detail. In an implementation, a material of the blade 65 may be polyimide (polyimide, PI). In another implementation, the material of the blade 65 may alternatively be a non-magnetic metal material, for example, an aluminum sheet. In this case, the blade 65 has high hardness.

In an implementation, a plating film may be formed on a surface of the blade 65. For example, the plating film is formed on the surface of the blade 65 through an evaporation process or a sputtering process. The plating film can improve smoothness of the blades 65, so that a friction force between the blades 65 is small in an opening and closing process of the blades 65.

Refer to FIG. 14 and FIG. 15. The blade 65 includes an inner edge 651 and an outer edge 652. Two ends of the inner edge 651 are connected to two ends of the outer edge 652. The inner edge 651 includes a first edge part 651a and a second edge part 651b that are connected. The first edge part 651a is configured to form at least a part of a side edge of the light transmission hole 650. The second edge part 651b is connected between the first edge part 651a and the outer edge 652. The second edge part 651b may be an arc, a straight line, a curve, or the like. In another implementation, the second edge part 651b may be omitted.

The first edge part 651a includes N connection edges 6511 that are connected. N connection edges 6511 of the M blades 65 are configured to form side edges of the light transmission hole 650. The light transmission hole 650 is polygonal, and N may be a positive integer not less than 2. The light transmission hole 650 may be approximately polygonal. In other words, the first edge part 651a may be divided into N parts. The N connection edges 6511 of the M blades 65 are configured to form side edges of the light transmission hole 650. The N connection edges 6511 of the M blades 65 can be spliced into a polygonal light transmission hole 650 including (M*N) side edges.

In this implementation, the connection edges 6511 are of a straight-line structure, two adjacent connection edges 6511 are connected, and the two adjacent connection edges 6511 form an inclined angle. In other words, the two connection edges 6511 are not located on a same straight line. Lengths of the N connection edges 6511 may be set to be the same, or lengths of at least two of the N connection edges 6511 may be set to be different. An angle corresponding to one side edge of the light transmission hole 650 formed by splicing the blades 65 may be $2\pi/M$. For example, when M is 6, an angle corresponding to one side edge of the light transmission hole 650 formed by splicing the blades 65 is 60 degrees.

In a conventionally set variable aperture, a side edge that is of a blade and that is used to form a light transmission hole is a single edge (for example, a single straight-line structure or an arc structure), and a light transmission hole formed by M blades is at most M-gonal. Generally, a quantity of blades is set to an even number less than 10. Due to light scattering and/or diffraction, and the like, a starburst is formed on each side edge of a light spot formed through the light transmission hole. As a result, when the camera module using the variable aperture shoots an image including a point light source, several very obvious starbursts are generated on a light spot correspondingly formed by the point light source. Consequently, the light spot is in an irregular shape, and an imaging effect of the camera module is affected.

In this implementation, because a first edge part 651a of each blade 65 includes N connection edges 6511, the M blades 65 can be spliced into a light transmission hole 650 that is at most (M*N)-gonal. The (M*N)-gonal light transmission hole 650 tends to be a round hole. There are at least (M*N) starbursts in a light spot that can be formed through the (M*N)-gonal light transmission hole. In comparison with a conventional variable stop with a same quantity of blades, the variable stop 605 in this application increases a quantity of starbursts in a light spot formed by the variable stop. In this way, a diffraction effect is enhanced, diffraction energy is effectively diverged, intensity of the starbursts is weakened, and a possibility of an irregular shape of the light spot is reduced, thereby improving an imaging effect and image quality of the camera module 100.

From another perspective, in comparison with a conventional variable stop where a light transmission hole has a same quantity of side edges, the variable stop 605 provided in this application has a smaller quantity of blades 65 and a simpler structure.

For example, there are six blades. In conventional settings, six blades can be spliced into a light transmission hole that is at most hexagonal, as shown in FIG. 16a-1 and FIG. 16a-2. FIG. 16a-1 is a diagram of a hexagonal light transmission hole formed by six blades based on conventional settings. A side edge that is of a blade and that is spliced to form the light transmission hole is a single straight-line structure. FIG. 16a-2 is another hexagonal light transmission hole formed by six blades based on conventional settings. A side edge that is of a blade and that is spliced to form the light transmission hole is a single arc structure. A light spot formed through the hexagonal light transmission hole shown in FIG. 16b-1 and a light spot formed through the hexagonal light transmission hole shown in FIG. 16b-2 each have six very obvious starbursts, which results in a seriously abnormal shape and affects imaging quality. FIG. 16b-1 is a diagram of a simulation result for angular spectrum diffraction calculation of a light spot correspondingly formed through the light transmission hole shown in FIG. 16a-1, and FIG. 16b-2 is a diagram of a simulation result for angular spectrum diffraction calculation of a light spot correspondingly formed through the light transmission hole shown in FIG. 16a-2. A horizontal coordinate and a vertical coordinate in a diagram of a simulation result for angular spectrum diffraction calculation in this specification indicates location coordinates.

In this implementation, for example, M is 6, and N is 3. As shown in FIG. 17a-1, FIG. 17a-2, FIG. 17a-3, and FIG. 17a-4, the six blades 65 can form an 18-gonal light transmission hole 650. Because a quantity of side edges of the light transmission hole 650 reaches 18, it can be learned from a simulation result for angular spectrum diffraction calculation that, as shown in FIG. 17b-1, FIG. 17b-2, FIG. 17b-3, and FIG. 17b-4, there are up to 18 starbursts in a light spot, and diffraction energy of light incident to the camera module 100 is effectively diverged, so that a shape of the entire light spot tends to be circular. In this way, when quantities of blades are the same, an imaging effect of the camera module 100 and quality of an image shot by the camera module 100 are improved.

A central axis of the light transmission hole 650 may coincide with a central axis of the variable aperture 60. The light transmission hole 650 is non-eccentrically disposed. The central axis of the light transmission hole 650 is a virtual axis that passes through a center of the variable stop 605 and that is perpendicular to a plane on which the plurality of blades 65 are located. FIG. 17a-1 is a diagram of an 18-gonal non-eccentric light transmission hole formed by six blades when an aperture is 2.0 according to an implementation of this application. FIG.

17a-3 is a diagram of an 18-gonal non-eccentric light transmission hole formed by six blades when an aperture is 2.8 according to an implementation of this application.

In another implementation, the light transmission hole 650 may alternatively be an eccentric hole. FIG. 17a-2 is a diagram of an 18-gonal eccentric light transmission hole formed by six blades when an aperture is 2.0 according to an implementation of this application. FIG. 17a-4 is a diagram of an 18-gonal eccentric light transmission hole formed by six blades when an aperture is 2.8 according to an implementation of this application. In comparison with a light spot formed by a hexagonal light transmission hole enclosed by six blades, the light spot still has an improved shape when the 18-gonal light transmission hole 650 is disposed as an eccentric hole.

In a possible implementation, the connection edges 6511 may be of an arc structure, so that each side edge of the light transmission hole 650 enclosed by the M blades 65 includes an arc structure. Angles of diffraction generated by blades 65 are different. When the angles of diffraction are different, starbursts of the light spot are in a radial shape at the end. When the shape of the light spot is close to a circle, divergence is large, so that the imaging effect and the image quality of the camera module 100 can be improved as well.

In another implementation, at least one of the N connection edges 6511 is a straight line or an arc. In another implementation, the connection edges 6511 are not limited to straight lines or arcs.

Refer to FIG. 18. In another implementation, two adjacent connection edges 6511 are in a transition connection through an arc edge 6512. In other words, chamfering may be performed at a joint of every two connected connection edges 6511, so that the two connection edges 6511 are in a transition connection through an arc. The arc edge 6512 may be an arc of an angle R. For example, the arc edge 6512 may be an arc of 15 degrees. A size of the angle R is not limited in this application. Transition of the arc edge 6512 results in different angles of diffraction generated by blades 65. When the angles of diffraction are different, starbursts of the light spot are in a radial shape at the end. When the shape of the light spot is close to a circle, divergence is large, so that the imaging effect and the image quality of the camera module 100 can be improved. For example, in a light transmission hole shown in FIG. 19a-1, M is 6, N is 2, and Q is 1. In other words, the light transmission hole shown in FIG. 19a-1 is 12-gonal. On each blade 65, two connection edges 6511 are connected through one arc edge 6512. FIG. 19b-1 is a diagram of a simulation result for angular spectrum diffraction calculation corresponding to the light transmission hole shown in FIG. 9a-1. For another example, in a light transmission hole shown in FIG. 19a-2, M is 6, N is 3, and Q is 2. In other words, the light transmission hole shown in FIG. 19a-2 is 18-gonal. On each blade 65, two connection edges 6511 are connected through one arc edge 6512. FIG. 19b-2 is a diagram of a simulation result for angular spectrum diffraction calculation corresponding to the light transmission hole shown in FIG. 19a-2.

In an implementation, when the light transmission hole 650 is of a polygonal structure, a quantity of side edges of the light transmission hole 650 is an even number. For example, the quantity of side edges of the light transmission hole 650 is not less than 12. For example, the light transmission hole 650 is of an approximately 18-gonal structure.

In an implementation, when the light transmission hole 650 is of a polygonal structure, a quantity of side edges of the light transmission hole 650 is an odd number. For example, the quantity of side edges of the light transmission hole 650 is not less than 7. As shown in FIG. 20, FIG. 20 is a diagram of light transmission holes of seven shapes and simulation results for angular spectrum diffraction calculation corresponding to the light spots. The light transmission holes of the seven shapes are in a first row in FIG. 20. From left to right in FIG. 20, the shapes of the light transmission holes are sequentially a circle, a triangle, a quadrilateral, a pentagon, a hexagon, a heptagon, an octagon, and a nonagon. A second row in FIG. 20 is a diagram of simulation results for angular spectrum diffraction calculation corresponding to the light transmission holes of the seven shapes. From left to right in FIG. 20, the shapes of the light transmission holes corresponding to the light spots are sequentially a circle, a triangle, a quadrilateral, a pentagon, a hexagon, a heptagon, an octagon, and a nonagon. In a diagram of a simulation result for angular spectrum diffraction calculation corresponding to a circular light transmission hole, a shape of a light spot is approximately a circle. When a quantity of side edges of a light transmission hole, for example, a triangular, pentagonal, heptagonal, or nonagonal light transmission hole, other than the circular light transmission hole, is an odd number, a quantity of starbursts on a light spot is twice the quantity of side edges. For a light transmission hole with an even quantity of side edges, for example, a quadrilateral, hexagonal, or octagonal light transmission hole, a quantity of starbursts on a light spot is equal to the quantity of side edges. However, a larger quantity of starbursts is more conducive to diffraction energy divergence, improves an imaging effect, and reduces a possibility of an irregular shape of the light spot.

In some possible implementations, a quantity of connection edges 6511 of the inner edge 651 may be 1 (that is, N is 1), and the connection edges 6511 are of a serrated structure, to enhance a diffraction effect. In this implementation, the light transmission hole 650 formed by the M blades 65 is approximately circular, and a side edge of the light transmission hole 650 is of a serrated structure, as shown in FIG. 21a. It can be learned from a simulation result for angular spectrum diffraction calculation that, as shown in FIG. 21b, a light spot formed through the light transmission hole shown in FIG. 21a is approximately circular.

Refer to FIG. 14 and FIG. 15 again. The outer edge 652 is of an irregular curve shape. An outer contour of the blade 65 is roughly in a "dolphin" shape, to increase an overlapping area of the variable aperture 60 in a small aperture state, reduce a possibility of light leakage, reduce a possibility of mislayering of the blades 65 in a moving process, and improve an imaging effect. The outer edge 652 includes a first end edge part 652a, a mounting edge 652b, and a second end edge part 652c that are sequentially connected. The first end edge part 652a and the second end edge part 652c are disposed opposite to each other. The inner edge 651 is connected between the first end edge part 652a and the second end edge part 652c. The second end edge part 652c is configured to be in contact with the fastening base 601.

A recess 6522 and a protrusion 6523 are disposed on a side that is of the first end edge part 652a and that is far away from the inner edge 651. The recess 6522 may avoid the guiding protruding part 631 of the rotatable support 603 when the variable aperture 60 is in a large aperture state. The protrusion 6523 may be disposed to increase an overlapping area that is between the blade 65 and another blade 65 and that is obtained when the variable aperture 60 is in the small aperture state. In another implementation, a shape of the blade 65 is not limited. The second end edge part 652c has an arc-shaped edge 6525 protruding toward the outside of the blade 65, and is configured to avoid a collision.

In an implementation, the blade 65 is provided with a rotatable hole 653. The plurality of rotating shaft protruding parts 621 of the fastening support 62 pass through the rotatable holes 653 of the plurality of blades 65 in a one-to-one correspondence. In other words, one rotating shaft protruding part 621 of the fastening support 62 passes through a rotatable hole 653 of one blade 65. It may be understood that a hole wall of the rotatable hole 653 may rotate relative to the rotating shaft protruding part 621. In this way, through cooperation between the rotatable hole 653 and the rotating shaft protruding part 621, the blade 65 can rotate relative to the fastening support 62 by using the rotating shaft protruding part 621 as a rotating shaft. For example, the rotatable hole 653 may be a circular hole.

In another embodiment, positions of the rotating shaft protruding part 621 and the rotatable hole 653 may be exchanged. The rotating shaft protruding part 621 is disposed on the blade 65. The fastening support 62 is provided with the rotatable hole 653.

In an implementation, the blade 65 is provided with a guiding hole 654, and the guiding hole 654 is slidably connected to the guiding protruding part 631 of the rotatable support 603. The guiding hole 654 guides and limits movement of the blade 65, to help improve smoothness of the movement of the blade 65. For example, the guiding hole 654 may be an arc-shaped hole. The guiding hole 654 includes a first end wall 6541 and a second end wall 6542 that are disposed opposite to each other. The first end wall 6541 is disposed closer to the rotatable hole 653 than the second end wall 6542. For example, the plurality of guiding protruding parts 631 of the rotatable support 603 pass through the guiding holes 654 of the plurality of blades 65 in a one-to-one correspondence. In other words, one guiding protruding part 631 of the rotatable support 603 passes through a guiding hole 654 of one blade 65. It may be understood that the guiding protruding part 631 may slide relative to a hole wall of the guiding hole 654. In another embodiment, positions of the guiding protruding part 631 and the guiding hole 654 may be exchanged. In other words, the guiding protruding part 631 may be disposed on the blade 65. The rotatable support 603 may be provided with the guiding hole 654.

Refer to FIG. 12. Each blade 65 is rotatably connected to the fastening support 62, and each blade 65 is slidably connected to the rotatable support 603. In this case, when the plurality of blades 65 are unfolded or folded, the hole diameter of the light transmission hole 650 of the plurality of blades 65 can be increased or decreased (or an area circled by the light transmission hole is increased or decreased). A shape of the light transmission hole 650 of the plurality of blades 65 is changed. For example, when the hole diameter of the light transmission hole 650 is the smallest (or the area circled by the light transmission hole is the smallest), the shape of the light transmission hole 650 of the plurality of blades 65 may be an M-gon. When the hole diameter of the light transmission hole 650 is the largest (or the area circled by the light transmission hole is the largest), the shape of the light transmission hole 650 of the plurality of blades 65 is an (M*N)-gon. The shape of the light transmission hole 650 may be changed between the M-gon and the (M*N)-gon. Certainly, in another implementation, a shape of the inner edge 651 of each blade 65 may be changed, so that when the plurality of blades 65 are unfolded or folded, the shape of the light transmission hole 650 of the plurality of blades 65 is not changed.

It may be understood that the first gasket 604 in this implementation is located between the blades 65 and the fastening support 62. In this way, when the blades 65 are unfolded or folded, the first gasket 604 may prevent the rotatable support 603 from scratching the blades 65. In an implementation, when the variable aperture 60 is in the initial state, the guiding protruding part 631 of the rotatable support 603 is in contact with the first end wall 6541 of the guiding hole 654. When the variable aperture 60 is in the end state, the guiding protruding part 631 of the rotatable support 603 is in contact with the second end wall 6542 of the guiding hole 654. The plurality of blades 65 form a largest polygonal form, that is, the light transmission hole 650 is (M*N)-gonal. When the variable aperture 60 is in the intermediate state, the guiding protruding part 631 of the rotatable support 603 is located between the first end wall 6541 and the second end wall 6542 that are of the guiding hole 654.

In an implementation, when the variable aperture 60 is in the initial state or the intermediate state, a maximum hole diameter of the light transmission hole

650 of the plurality of blades 65 is less than the hole diameter of the light transmission hole 641 of the first gasket 604. In this case, the light transmission holes 650 of the plurality of blades 65 form an aperture hole of the variable aperture 60. In other words, the light transmission hole 650 of the plurality of blades 65 may control luminous flux of ambient light. When the variable aperture 60 is in the end state, the guiding protruding part 631 of the rotatable support 603 is disposed close to the second end wall 6542 of the guiding hole 654. The hole diameter of the light transmission hole 650 of the plurality of blades 65 keeps increasing. In this case, the light transmission hole 641 of the first gasket 604 is exposed relative to each blade 65, and the hole diameter of the light transmission hole 650 of the plurality of blades 65 is greater than the hole diameter of the light transmission hole 641 of the first gasket 604. In this case, the light transmission hole 641 of the first gasket 604 forms an aperture hole of the variable aperture 60. Therefore, the first gasket 604 in this implementation has a "multi-purpose" effect.

Refer to FIG. 22. The driving component 607 includes a first magnet 67a, a second magnet 67b, a first coil 68a, a second coil 68b, and a flexible circuit board 69.

The first magnet 67a may be fastened to the first mounting groove 633 of the rotatable support 603 through an adhesive or the like (as shown in FIG. 23a). For example, the first magnet 67a is in an arc shape. The shape of the first magnet 67a matches a shape of the first mounting groove 633. In this way, when the first magnet 67a is fastened into the first mounting groove 633, the first magnet 67a may be embedded in the rotatable support 603. Integrity of a structure formed by the first magnet 67a and the rotatable support 603 is better. In addition, the first magnet 67a and the rotatable support 603 have overlapping regions in all directions, and the first magnet 67a is unlikely to additionally increase a size of the variable aperture 60. In another implementation, the first magnet 67a may be embedded in the rotatable support 603 through an injection molding process.

The second magnet 67b may be fastened to the second mounting groove 634 of the rotatable support 603 through an adhesive or the like. For example, the second magnet 67b is in an arc shape. The shape of the second magnet 67b matches a shape of the second mounting groove 634. In this way, when the second magnet 67b is fastened into the second mounting groove 634, the second magnet 67b may be embedded in the rotatable support 603. Integrity of a structure formed by the second magnet 67b and the rotatable support 603 is better. In addition, the second magnet 67b and the rotatable support 603 have overlapping regions in all directions, and the second magnet 67b is unlikely to additionally increase the size of the variable aperture 60. In another implementation, the second magnet 67b may be embedded in the rotatable support 603 through an injection molding process.

In this implementation, the first coil 68a is located in the first through hole 6230 (as shown in FIG. 23b). The second coil 68b is located in the second through hole 6240. In this way, the first coil 68a and the second coil 68b have overlapping regions with the fastening base 601 in all directions. In this case, the first coil 68a and the second coil 68b may use a space in which the fastening base 601 is located, and the first coil 68a and the second coil 68b do not additionally increase the size of the variable aperture 60. This helps implement miniaturization of the variable aperture 60.

For example, the first magnet 67a and the second magnet 67b are symmetrical with respect to a center of the rotatable support 603. In this way, when the first magnet 67a and the second magnet 67b are fastened to the rotatable support 603, a structure formed by the first magnet 67a, the second magnet 67b, and the rotatable support 603 has better symmetry. In this case, when the first magnet 67a, the second magnet 67b, and the rotatable support 603 cooperate with another component, the first magnet 67a, the second magnet 67b, and the rotatable support 603 are unlikely to tilt due to an unstable center of gravity.

In an implementation, both the first coil 68a and the second coil 68b are electrically connected to the flexible circuit board 69. The first coil 68a and the second coil 68b are located on an inner peripheral side surface of the flexible circuit board 69. The first coil 68a may be disposed facing the first magnet 67a through the first through hole 6230. The first coil 68a is disposed opposite to the first magnet 67a. The second coil 68b may be disposed facing the second magnet 67b through the second through hole 6240. The second coil 68b is disposed opposite to the second magnet 67b. It should be understood that, that the first coil 68a faces the first magnet 67a may be that a plane on which the first coil 68a is located and the first magnet 67a are disposed face to face. In this implementation, both the plane on which the first coil 68a is located and a plane on which the first magnet 67a is located are parallel to the optical axis direction of the variable aperture 60. The plane on which the first coil 68a is located may be perpendicular to an axis of winding of the first coil 68a. That the second coil 68b faces the second magnet 67b may be that a plane on which the second coil 68b is located and the second magnet 67b are disposed face to face. In this implementation, both the plane on which the second coil 68b is located and a plane on which the second magnet 67b is located are parallel to the optical axis direction of the variable aperture 60. The plane on which the second coil 68b is located may be perpendicular to an axis of winding of the second coil 68b.

In another implementation, the first coil 68a may alternatively be located outside the first through hole 6230. The second coil 68b may alternatively be located outside the second through hole 6240.

In another implementation, positions of the first magnet 67a and the first coil 68a may be exchanged. Positions of the second magnet 67b and the second coil 68b may also be exchanged.

In an implementation, the driving component 607 further includes a drive chip, and the drive chip may be fastened to the flexible circuit board 69 in a manner such as welding. The drive chip is further electrically connected to the first coil 68a and the second coil 68b. The drive chip is configured to supply power to the first coil 68a and the second coil 68b. In this implementation, the drive chip is electrically connected to the flexible circuit board 69, and is electrically connected to the first coil 68a and the second coil 68b through the flexible circuit board 69.

For example, the flexible circuit board 69 may be electrically connected to the module circuit board 10 (refer to FIG. 3) through cables in some components (for example, a motor or a bracket of the lens assembly) of the camera module 100. In this way, the drive chip may be electrically connected to the module circuit board 10 through the flexible circuit board 69. In other words, the module circuit board 10 may transmit an electrical signal to the drive chip through the flexible circuit board 69.

In this implementation, when the drive chip receives a signal, the drive chip may transmit a current signal to the first coil 68a and the second coil 68b through the flexible circuit board 69. When there is a current signal in the first coil 68a, the first coil 68a and the first magnet 67a may generate forces interacting with each other. In this way, when the first magnet 67a is subject to an acting force, the first magnet 67a may drive the rotatable support 603 to rotate relative to the base 61 and the fastening support 62. In addition, when the second coil 68b has a current signal, the second coil 68b and the second magnet 67b may generate forces interacting with each other. In this way, when the second magnet 67b is subject to an acting force, the second magnet 67b may drive the rotatable support 603 to rotate relative to the fastening support 62 and the base 61.

The drive chip may be further configured to detect magnetic field strength of the second magnet 67b. It may be understood that, when the rotatable support 603 rotates relative to the base 61 and the fastening support 62, the second magnet 67b also rotates with the rotatable support 603 relative to the base 61 and the fastening support 62. In this case, the second magnet 67b is located at different positions relative to the base 61 and the fastening support 62. The drive chip may be configured to detect magnetic field strength of the second magnet 67b at different positions. In this way, angles at which the rotatable support 603 rotates relative to the base 61 and the fastening support 62 may be determined based on the magnetic field strength detected by the drive chip, so that a status of the variable aperture 60 is accurately determined, and luminous flux entering the variable aperture 60 is accurately controlled.

In another implementation, a structure of the driving component 607 is not limited in this application, provided that the driving component 607 can drive the rotatable support 603 to rotate relative to the fastening support 62.

Refer to FIG. 6 again. The protective cover 608 may be of a ring-shaped structure. The protective cover 608 encloses a light transmission hole 731. The light transmission hole 731 communicates to the light transmission hole 650. The protective cover 608 may be an integral mechanical part, or may be a spliced mechanical part. For example, a plurality of parts form an integral mechanical part in a splicing manner (for example, the mortise-and-tenon joint process) or a fastening manner (for example, a welding process or a bonding process).

In an implementation, the protective cover 608 includes a first cover body 732 and a second cover body 733 that are stacked. The first cover body 732 and the second cover body 733 are disposed separately. Both the first cover body 732 and the second cover body 733 are provided with a light transmission hole 731. The first cover body 732 is located between the second cover body 733 and the plurality of blades 65 of the variable stop 605. The first cover body 732 is fastened to the fastening support 62, to limit the variable stop 605 between the first cover body 732 and the rotatable support 603. The second cover body 733 fixedly covers a side that is of the first cover body 732 and that is far away from the rotatable support 603, and the second cover body 733 is configured to cover components such as the first cover body 732 and the variable stop 605 in the variable aperture 60.

For example, the first cover body 732 is made of plastic. For example, the first cover body may be made of a Soma sheet, and a material of the Soma sheet may be a PET (polyethylene terephthalate, polyethylene terephthalate) material or a PI (polyimide, polyimide) material, to reduce costs of the variable aperture 60 while reducing a weight of the variable aperture 60. The second cover body 733 may be made of plastic, for example, polyimide (polyimide, PI). The second cover body 733 may be made of plastic. For example, the second cover body may be made of a polyethylene terephthalate (polyethylene terephthalate, PET) material or a polyimide (polyimide, PI) material. The second cover body 733 is made of plastic, so that the costs of the variable aperture can be reduced while a weight of the protective cover is reduced.

In another implementation of this application, the first cover body 732 may be made of a metal material, for example, an aluminum sheet, a steel sheet, an aluminum alloy sheet, or a magnesium alloy sheet. It may be understood that the first cover body 732 is an aluminum sheet or a steel sheet. Investment costs of the first cover body 732 are low. The first cover body 732 is made of metal, so that structural strength and a collision resistance capability of the first cover body 732 can be improved. In this way, when the variable aperture 60 falls and collides, the first cover body 732 is unlikely to be damaged or deformed, and reliability of the first cover body 732 is better. In addition, the first cover body 732 is unlikely to squeeze the blade 65 due to damage or deformation, and the blade 65 is unlikely to be damaged or deformed. Therefore, reliability of the blade 65 is better. A service life of the variable aperture 60 is long. The second cover body 733 may be made of plastic. For example, the second cover body may be made of a polyethylene terephthalate (polyethylene terephthalate, PET) material or a polyimide (polyimide, PI) material. The second cover body 733 is made of plastic, so that the costs of the variable aperture can be reduced while the weight of the protective cover is reduced. In this way, the first cover body 732 forms a metal part of the protective cover 608. The second cover body 733 forms a plastic part of the protective cover 608. It may be understood that, in comparison with a protective cover of a plastic structure, the protective cover 608 in this implementation has better structural strength and a better collision resistance capability. When the variable aperture 60 falls and collides, the protective cover 608 is unlikely to be damaged or deformed, and reliability of the protective cover 608 is better. In addition, the protective cover 608 is unlikely to squeeze the blade 65 due to damage or deformation, and the blade 65 is unlikely to be damaged or deformed. Therefore, reliability of the blade 65 is better.

In another implementation of this application, the protective cover 608 may be formed through the insert molding (insert molding) process. For example, a metal material like an aluminum sheet is placed in a mold to form an integrated part through injection molding. It may be understood that, in comparison with a solution in which the first cover body 732 is fastened to the second cover body 733 through an adhesive or another connector, in this solution, the first cover body 732 and the second cover body 733 are disposed as an integrally formed structure. This can simplify a structure of the protective cover 608, and can reduce a quantity of components of the variable aperture 60. In addition, a thickness of a connecting piece or an adhesive layer may be omitted, and a thickness of the protective cover 608 may be reduced, to help implement thinning setting of the variable aperture 60. Quality of the protective cover 608 may be reduced, to help implement lightweight setting of the variable aperture 60.

In another implementation, the first cover body 732 and the second cover body 733 of the protective cover 608 may alternatively be fastened to each other through an adhesive or in another manner.

In another implementation, the second cover body 733 may alternatively be made of a metal material. For example, the second cover body may be made of an aluminum sheet, a steel sheet, an aluminum alloy, a magnesium alloy, or the like. It may be understood that the second cover body is made of an aluminum sheet or a steel sheet. Investment costs of the second cover body are low. The second cover body is made of metal, so that structural strength and a collision resistance capability of the second cover body can be improved. In this way, when the variable aperture falls and collides, the second cover body is unlikely to be damaged or deformed, and reliability of the second cover body is better.

Refer to FIG. 24 and FIG. 25. In an implementation, a plurality of first avoidance spaces 7323 spaced from each other are disposed on a bottom surface that is of the first cover body 732 and that faces the variable stop 605, and are configured to accommodate the corresponding rotating shaft protruding parts 621. The plurality of first avoidance spaces 7323 are disposed around the light transmission hole 731 of the protective cover 608. In this implementation, the first avoidance spaces 7323 are blind holes disposed on the bottom surface that is of the first cover body 732 and that faces the variable stop 605. In another implementation, the first avoidance space 7323 may be a through hole.

A plurality of second avoidance spaces 7324 are further disposed on the bottom surface that is of the first cover body 732 and that faces the variable stop 605, and are configured to accommodate the corresponding guiding protruding parts 631. The plurality of second avoidance spaces 7324 are disposed around the light transmission hole 731 of the protective cover 608. The plurality of second avoidance spaces 7324 and the plurality of first avoidance spaces 7323 are further spaced from each other. In this implementation, a size of an opening of a second avoidance space 7324 is greater than a size of an opening of a first avoidance space 7323. In this implementation, the second avoidance space 7324 is a through hole. In another implementation, the second avoidance space 7324 may be of a groove structure.

During assembly, the plurality of rotating shaft protruding parts 621 of the fastening support 62 are disposed in the plurality of first avoidance spaces 7323 of the protective cover 608 in a one-to-one correspondence. In this way, the protective cover 608 may cover the rotating shaft protruding parts 621 of the fastening supports 62, so that in an assembly process of the camera module 100, a filament and a foreign object of the camera module 100 can be prevented from falling into a rotatable hole 653 of a blade 65 in a manufacturing process, and movement of a rotating shaft protruding part 621 in the rotatable hole 653 is not affected. In addition, appearance fineness of the variable aperture 60 can be improved.

In an implementation, a rounded corner, namely, a "C" corner, is disposed between side walls of a first avoidance space 7323. In this way, the blades 65 are unlikely to be scratched at a joint between the side walls of the first avoidance space 7323.

In an implementation, the rotating shaft protruding parts 621 of the fastening support 62 may be in interference fit with the first avoidance spaces 7323 of the protective cover 608. In this way, a connection between the fastening support 62 and the protective cover 608 is more stable, and the protective cover 608 and the fastening support 62 may form a structure with better integrity.

In an implementation, the plurality of guiding protruding parts 631 of the rotatable support 603 are disposed in the plurality of second avoidance spaces 7324 of the protective cover 608 in a one-to-one correspondence, and the guiding protruding parts 631 of the rotatable support 603 may move in the second avoidance spaces 7324. In this way, the protective cover 608 may cover the guiding protruding parts 631 of the rotatable support 603, so that in an assembly process of the camera module 100, a filament and a foreign object of the camera module 100 can be prevented from falling into a guiding hole 654 of a blade 65 in a manufacturing process, movement of a guiding protruding part 631 in the guiding hole 654 is not affected. In addition, appearance fineness of the variable aperture 60 can be improved.

In an implementation, a rounded corner, namely, a "C" corner, is disposed between side walls of a second avoidance space 7324. In this way, the blades 65 are unlikely to be scratched at a joint between the side walls of the second avoidance space 7324. It may be understood that the structure of the protective cover 608 is not limited. For example, the protective cover 608 is provided with avoidance spaces, provided that the avoidance spaces are configured to avoid the rotating shaft protruding parts 621 and the guiding protruding parts 631.

In another implementation, the protective cover 608 may be omitted, and there is a sufficient isolation space between the variable stop 605 and another component of the camera module 100, provided that the variable stop 605 is not separated from the fastening base 601 and the rotatable support 603.

Refer to FIG. 26. In another implementation, the second cover body 733 includes a top surface 733a, an outer peripheral side surface 733b, and an inner peripheral side surface 733c. The top surface 733a of the second cover body 733 is connected between the outer peripheral side surface 733b and the inner peripheral side surface 733c. A plating layer 734 is disposed on the top surface 733a, the outer peripheral side surface 733b, and the inner peripheral side surface 733c of the second cover body 733. For example, a plating layer 734 is deposited on the top surface 733a, the outer peripheral side surface 733b, and the inner peripheral side surface 733c of the second cover body 733 through a process such as a physical vapor deposition (PVD) method. The plating layer 734 may be black or matte black, so that a component at the bottom of the second cover body 733 can be blocked, and appearance delicateness of the variable aperture 60 can be improved to a large extent.

In an implementation, a plating layer 734 is deposited on a top surface, an outer peripheral side surface, and an inner peripheral side surface that are of the first cover body 732, so that a component at the bottom of the first cover body 732 can be further blocked, and appearance delicateness of the variable aperture 60 can be improved to a large extent.

In an implementation, an anti-reflection film 735 may be disposed on a surface of the plating layer 734. The anti-reflection film 735 may eliminate a light flare (flare) problem to a large extent, thereby improving appearance delicateness of the variable aperture 60 to a large extent.

In an implementation, no plating layer is disposed on a bottom surface of the first cover body 732. In this way, the bottom surface of the first cover body 732 may be directly electrically connected to the flexible circuit board 69, and is grounded through the flexible circuit board 69. In this way, the first cover body 732 can reduce radio frequency interference.

It should be understood that the expressions such as "include" and "may include" that can be used in this application represent existence of disclosed functions, operations, or constituent elements, and are not limited to one or more additional functions, operations, or constituent elements. In this application, the terms such as "include" and/or "have" can be construed as representing a particular feature, quantity, operation, constituent element, component, or a combination thereof, but cannot be construed as excluding existence or addition possibility of one or more other features, quantities, operations, constituent elements, components, or combinations thereof.

In addition, in this application, the expression "and/or" includes any and all combinations of words listed in association. For example, the expression "A and/or B" may include A, may include B, or may include both A and B.

In the descriptions of embodiments of this application, it should be noted that, unless otherwise specified or limited expressly, the term "connection" should be understood in a broad sense, for example, the term "connection" may be a detachable connection or an undetachable connection, or may be a direct connection or an indirect connection by using an intermediate medium. "Fastening" means that two parts are connected to each other and a relative position relationship remains unchanged after the two parts are connected. "Rotatable connection" means that two parts are connected to each other and can rotate relative to each other after the two parts are connected to each other. "Slidable connection" means that two parts are connected to each other and can slide relative to each other after the two parts are connected to each other. Orientational terms mentioned in embodiments of this application, for example, "top", "bottom", "inside", "outside", "left", and "right", are merely directions with reference to the accompanying drawings. Therefore, the orientational terms are used to better and more clearly describe and understand embodiments of this application, instead of indicating or implying that a specified apparatus or element needs to have a specific orientation or be constructed and operated in a specific orientation. Therefore, this cannot be understood as a limitation on embodiments of this application.

In addition, in embodiments of this application, all of mentioned mathematical concepts such as "symmetric", "equal", "parallel", and "vertical" are set for the current process level, but not for absolute strict definitions in a mathematical sense, allow a small deviation, and may indicate "approximately symmetric", "approximately equal", "approximately parallel", "approximately vertical", and the like. For example, that A is parallel to B means that A is parallel or approximately parallel to B, and an included angle of 0 degrees to 10 degrees between A and B is allowed. That A is vertical to B means that A is vertical or approximately vertical to B, and an included angle of 80 degrees to 100 degrees between A and B is allowed.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A variable aperture (60), comprising a fastening base (601), a rotatable support (603), and a variable stop (605), wherein

   the rotatable support (603) is rotatably accommodated in the fastening base (601), and the rotatable support (603) encloses a space (630); the variable stop (605) comprises M blades (65), the M blades (65) jointly enclose a light transmission hole (650), the light transmission hole (650) communicates with the space (630), and each blade (65) is rotatably connected to the fastening base (601), and is slidably connected to the rotatable support (603), wherein M is a positive integer not less than 2; and
   a positioning protruding part (622) is disposed on an inner surface that is of the fastening base (601) and that faces the rotatable support (603), and/or a positioning protruding part (622) is disposed on an outer surface that is of the rotatable support (603) and that faces the fastening base (601), and the fastening base (601) is capable of being in contact with the rotatable support (603) through the positioning protruding part (622).

2. The variable aperture (60) according to claim 1, wherein the positioning protruding part (622) has a contact surface, the rotatable support (603) is in contact with the fastening base (601) through the contact surface, and the contact surface (6221) is a curved surface.

3. The variable aperture (60) according to claim 2, wherein lubricant oil or a lubricant film layer is disposed on the contact surface.

4. The variable aperture (60) according to any one of claims 1 to 3, wherein the fastening base (601) comprises a base (61) and a fastening support (62) that are stacked and fastened to each other, the rotatable support (603) is rotatably accommodated in the fastening support (62), the positioning protruding part (622) is disposed on an inner surface that is of the fastening support (62) and that faces the rotatable support (603) and/or the outer surface that is of the rotatable support (603) and that faces the fastening support (62).

5. The variable aperture (60) according to claim 4, wherein a first stopper (618) is disposed on an inner surface that is of the base (61) and that faces the rotatable support (603), and the first stopper (618) is in contact with a bottom that is of the rotatable support (603) and that is far away from the variable stop (605).

6. The variable aperture (60) according to any one of claims 1 to 5, wherein each blade (65) has an inner edge (651), the inner edge (651) comprises N connection edges (6511), N connection edges (6511) of the M blades (65) are configured to form side edges of the light transmission hole (650), and the light transmission hole is polygonal, wherein N is a positive integer not less than 2.

7. The variable aperture (60) according to claim 6, wherein two adjacent connection edges (6511) are in a transition connection through an arc edge (6512).

8. The variable aperture (60) according to claim 6 or 7, wherein the connection edge (6511) is of a straight-line structure.

9. The variable aperture (60) according to claim 6, wherein the connection edge (6511) is of a serrated structure.

10. The variable aperture (60) according to any one of claims 6 to 9, wherein each blade further comprises an outer edge (652) connected to the inner edge (651), the outer edge (652) comprises a first end edge part (652a) and a second end edge part (652c) that are disposed opposite to each other, the inner edge (651) is connected between the first end edge part (652a) and the second end edge part (652c), and the N connection edges (6511) are located at an end that is of the inner edge (651) and that is closer to the first end edge part (652a); and
   a recess (6522) and a protrusion (6523) are disposed on a side that is of the first end edge part and that is far away from the inner edge (651), the recess (6522) is recessed toward the inside of the blade (65), and the protrusion (6523) protrudes toward the outside of the blade.

11. The variable aperture (60) according to claim 10, wherein the second end edge part (652c) has an arc-shaped edge (6525) protruding toward the outside of the blade (65).

12. The variable aperture (60) according to any one of claims 6 to 11, wherein when the light transmission hole (650) is of a polygonal structure, a quantity of side edges of the light transmission hole (650) is an odd number.

13. The variable aperture (60) according to any one of claims 6 to 11, wherein when the light transmission hole (650) is of a polygonal structure, a quantity of side edges of the light transmission hole (650) is an even number.

14. The variable aperture (60) according to any one of claims 1 to 13, wherein the fastening base (601) has a plurality of rotating shaft protruding parts (621) spaced from each other, and the rotatable support (603) has a plurality of guiding protruding parts (631) spaced from each other; and
each blade is provided with a rotatable hole (653) and a guiding hole (654) that are spaced from each other, the plurality of rotating shaft protruding parts (621) are rotatably connected into rotatable holes (653) of the plurality of blades (65) in a one-to-one correspondence, and the plurality of guiding protruding parts (631) are slidably connected into guiding holes (654) of the plurality of blades (65) in a one-to-one correspondence.

15. The variable aperture (60) according to claim 14, wherein the variable aperture (60) further comprises a protective cover (608), the protective cover (608) comprises a first cover body (732) and a second cover body (733), the first cover body (732) is provided with a plurality of avoidance spaces (7323) spaced from each other, to avoid the rotating shaft protruding part (621) and the guiding protruding part (631), the second cover body (733) is fastened to the first cover body (732), and is located on a side that is of the first cover body (732) and that is far away from the blade (65), and the second cover body (733) is configured to cover the avoidance spaces (7323) of the first cover body (732).

16. The variable aperture (60) according to claim 15, wherein the first cover body (732) and the second cover body (733) are of an integrated structure.

17. The variable aperture (60) according to claim 15, wherein the first cover body (732) is made of plastic or metal, and the second cover body (733) is made of plastic or metal.

18. The variable aperture (60) according to claim 15, wherein a plating layer (734) is disposed on a top surface (733a), an outer peripheral side surface (733b), and an inner peripheral side surface (733c) of the second cover body (733).

19. The variable aperture (60) according to claim 18, wherein an anti-reflection film (735) is disposed on a surface of the plating layer (734).

20. The variable aperture (60) according to any one of claims 1 to 19, wherein the variable aperture (60) further comprises a flexible circuit board (69), a first magnet (67a), and a first coil (68a), the flexible circuit board (69) surrounds an outer peripheral side surface of the fastening base (601) and is fastened to the outer peripheral side surface of the fastening base (601), the first coil (68a) is fastened to an inner peripheral side surface of the flexible circuit board (69) and is electrically connected to the flexible circuit board (69), the first magnet (67a) is fastened to an outer peripheral side surface of the rotatable support (63), the first coil (68a) faces the first magnet (67a), the first magnet (67a) is configured to cooperate with the first coil (68a) to drive the rotatable support (63) to rotate relative to the fastening base (601), and each blade (65) slides relative to the rotatable support (63) and rotates relative to the fastening base (601), to change a hole diameter of the light transmission hole (650) of the M blades (65).

21. The variable aperture (60) according to claim 20, wherein the fastening base (601) is provided with a first through hole (6230), and the first coil (68a) passes through the first through hole (6230) and faces the first magnet (67a).

22. The variable aperture (60) according to claim 20, wherein a side surface of the fastening base (601) is provided with a first adhesive groove (619), an adhesive layer is disposed in the first adhesive groove (619), and the adhesive layer is further connected to the flexible circuit board (69).

23. The variable aperture (60) according to any one of claims 1 to 22, wherein the variable aperture (60) further comprises a first gasket (604), the first gasket (604) is fastened to the rotatable support (603) and is located on a side that is of the plurality of blades (65) and that faces the rotatable support (603), an inner edge (651a) of the first gasket (604) encloses a light transmission hole (641), and the light transmission hole (650) of the plurality of blades (65) communicates with the space (630) of the rotatable support (603) through the light transmission hole (641) of the first gasket (604);

the variable aperture (60) comprises an initial state, an intermediate state, and an end state; when the variable aperture (60) is in the initial state or the intermediate state, a maximum hole diameter of the light transmission hole (650) of the plurality of blades (65) is less than a hole diameter of the light transmission hole (641) of the first gasket (604); and when the variable aperture (60) is in the end state, a minimum hole diameter of the light transmission hole (650) of the plurality of blades (65) is greater than or equal to the hole diameter of the light transmission hole (641) of the first gasket (604).

24. A camera module (100), comprising a lens assembly (50) and the variable aperture (60) according to any one of claims 1 to 23, wherein the variable aperture (60) is fastened to the lens assembly (50) and is located on a light incidence side of the lens assembly (50).

25. The camera module (100) according to claim 24, wherein the lens assembly (50) comprises a motor (51) and a lens (52), the lens (52) is disposed on the motor (51), and the motor (51) is configured to drive the lens (52) to move in an optical axis direction of the camera module (100); and
the variable aperture (60) is fastened to the lens (52) and is located on a light incidence side of the lens (52).

26. An electronic device (1), comprising a housing (200) and the camera module (100) according to claim 24 or 25, wherein the camera module (100) is disposed on the housing (200).

FIG. 1

FIG. 2

FIG. 3

FIG. 4

FIG. 5

FIG. 6

FIG. 7

FIG. 8

62

FIG. 9a

62

FIG. 9b

FIG. 9c

FIG. 9d

FIG. 10a

FIG. 10b

FIG. 11

FIG. 12

605

650

65

654

653

FIG. 13

65

6523

6522

652b

652

652a

6542

654

6541

6511

6511

6511

6525

6531

653

652c

651a

6525

651b

651

FIG. 14

FIG. 15

FIG. 16a-1

FIG. 16a-2

FIG. 16b-1

FIG. 16b-2

FIG. 17a-1     FIG. 17a-2     FIG. 17a-3     FIG. 17a-4

FIG. 17b-1     FIG. 17b-2     FIG. 17b-3     FIG. 17b-4

651a

FIG. 18

FIG. 19a-1

FIG. 19a-2

FIG. 19b-1

FIG. 19b-2

FIG. 20

FIG. 21a

FIG. 21b

FIG. 22

FIG. 23a

FIG. 23b

FIG. 24

FIG. 25

FIG. 26

38

# INTERNATIONAL SEARCH REPORT

International application No.

**PCT/CN2023/115394**

### A. CLASSIFICATION OF SUBJECT MATTER

G03B9/06(2021.01)i

According to International Patent Classification (IPC) or to both national classification and IPC

### B. FIELDS SEARCHED

Minimum documentation searched (classification system followed by classification symbols)

IPC:G03B9/02/LOW,G03B9/16,G03B9/18/LOW

Documentation searched other than minimum documentation to the extent that such documents are included in the fields searched

Electronic data base consulted during the international search (name of data base and, where practicable, search terms used)

CNTXT, ENTXTC, ENTXT, WPABS, DWPI: 球面, 球形, 球状, 半球, 曲面, 圆柱, 柱面, 凸, 突起, 定位, 限位, 抵触, 接触, 支承, 支点, 摩擦, 阻力, 灵活, 转动, 转盘, 转子, 旋转, protrusion?, convex?, spher+, semispher+, semicircular+, semicircle+, cylindrical+, contact+, position+, fulcrum+, bearing+, friction+, smooth+, unhinder+, slid+, rotat+

### C. DOCUMENTS CONSIDERED TO BE RELEVANT

| Category* | Citation of document, with indication, where appropriate, of the relevant passages | Relevant to claim No. |
|---|---|---|
| PX | CN 115657399 A (HUAWEI TECHNOLOGIES CO., LTD.) 31 January 2023 (2023-01-31) claims 1-26 | 1-26 |
| Y | CN 114285242 A (SHANGHAI B.L ELECTRONICS CO., LTD.) 05 April 2022 (2022-04-05) description, paragraphs 50-76, and figures 1-8 | 1-26 |
| Y | CN 112513731 A (SZ DJI TECHNOLOGY CO., LTD.) 16 March 2021 (2021-03-16) description, paragraphs 20, 25, and 36, and figures 1-2 and 8 | 1-26 |
| Y | CN 110579925 A (SAMSUNG ELECTRO-MECHANICS CO., LTD.) 17 December 2019 (2019-12-17) description, paragraphs 51-60 and 91-111, and figures 4-8 | 6-26 |
| Y | JP 2017003840 A (CANON DENSHI KK.) 05 January 2017 (2017-01-05) description, paragraph 35, and figures 1-5 | 1-26 |
| Y | CN 111722453 A (SAMSUNG ELECTRO-MECHANICS CO., LTD.) 29 September 2020 (2020-09-29) description, paragraphs 96-126, and figures 4-8C | 6-26 |

☑ Further documents are listed in the continuation of Box C.　　☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **08 December 2023** | **08 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

<table>
<tr><td colspan="3" align="center">**INTERNATIONAL SEARCH REPORT**</td><td colspan="2">International application No.<br><br>**PCT/CN2023/115394**</td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| Y | JP 2005249812 A (TOKYO MICRO KK.) 15 September 2005 (2005-09-15)<br>description, paragraphs 21-40, and figures 2-4 | 6-26 |
| A | CN 217133471 U (LARGAN PRECISION CO., LTD.) 05 August 2022 (2022-08-05)<br>entire document | 1-26 |

## INTERNATIONAL SEARCH REPORT
### Information on patent family members

| International application No. |
| --- |
| **PCT/CN2023/115394** |

| Patent document cited in search report | | | Publication date (day/month/year) | Patent family member(s) | | | Publication date (day/month/year) |
| --- | --- | --- | --- | --- | --- | --- | --- |
| CN | 115657399 | A | 31 January 2023 | None | | | |
| CN | 114285242 | A | 05 April 2022 | CN | 114285242 | B | 19 August 2022 |
| | | | | WO | 2023123646 | A1 | 06 July 2023 |
| CN | 112513731 | A | 16 March 2021 | CN | 112513731 | B | 12 April 2022 |
| | | | | CN | 211653354 | U | 09 October 2020 |
| | | | | WO | 2021168786 | A1 | 02 September 2021 |
| CN | 110579925 | A | 17 December 2019 | KR | 20190139657 | A | 18 December 2019 |
| | | | | KR | 102158710 | B1 | 22 September 2020 |
| | | | | US | 2019377238 | A1 | 12 December 2019 |
| | | | | US | 10852623 | B2 | 01 December 2020 |
| | | | | CN | 110579925 | B | 20 August 2021 |
| | | | | CN | 209570784 | U | 01 November 2019 |
| | | | | IN | 201914011776 | A | 13 December 2019 |
| JP | 2017003840 | A | 05 January 2017 | None | | | |
| CN | 111722453 | A | 29 September 2020 | KR | 20200112158 | A | 05 October 2020 |
| | | | | KR | 102297281 | B1 | 02 September 2021 |
| | | | | US | 2020301246 | A1 | 24 September 2020 |
| | | | | US | 11156898 | B2 | 26 October 2021 |
| | | | | CN | 111722453 | B | 28 June 2022 |
| | | | | CN | 211698527 | U | 16 October 2020 |
| JP | 2005249812 | A | 15 September 2005 | None | | | |
| CN | 217133471 | U | 05 August 2022 | TW | 804212 | B1 | 01 June 2023 |

Form PCT/ISA/210 (patent family annex) (July 2022)

**REFERENCES CITED IN THE DESCRIPTION**

**Patent documents cited in the description**

- CN 202211214491